# EUROPEAN PATENT APPLICATION

(11) **EP 4 770 210 A1**
(43) Date of publication of application: **01.07.2026**
(21) Application number: 24909826.0
(22) Date of filing: 13.08.2024
(51) Int. Cl.: H04W 52/02

(54) **CONTROL METHOD AND RELATED DEVICE**

(30) Priority: 26.12.2023 CN 202311820507; 26.03.2024 CN 202410357074
(71) Applicant: Honor Device Co., Ltd., Shenzhen, Guangdong 518040 (CN)
(72) Inventor: WEI, Jiaqin, Shenzhen, Guangdong 518040 (CN); WANG, Yaosheng, Shenzhen, Guangdong 518040 (CN); LI, Wang, Shenzhen, Guangdong 518040 (CN); HUANG, Le, Shenzhen, Guangdong 518040 (CN)
(74) Representative: MERH-IP Matias Erny Reichl Hoffmann Patentanwälte PartG mbB
(86) International application number: PCT/CN2024/111814
(87) International publication number: WO 2025/138875

(57) **Abstract**

Embodiments of this application provide a control method and a related device, and relate to the field of terminal technologies. The method includes: When an electronic device uses a terrestrial network for communication in a first power consumption mode, battery level information of the electronic device is a first battery level, and/or temperature information of the electronic device is a first temperature, where the first battery level is less than or equal to a first battery level threshold, and the first temperature is within a first temperature range; and in response to an operation used to enable a satellite network, the electronic device displays the first prompt information, switches from the first power consumption mode to the second power consumption mode, and uses the satellite network for communication in the second power consumption mode. The first prompt information is used to inform that the electronic device is to enter the second power consumption mode. Power consumption of the electronic device when running in the second power consumption mode is less than power consumption of the electronic device when running in the first power consumption mode. This can prolong duration of using satellite communication by the electronic device, and simplify a user operation of switching to an ultra power saving mode.

## Description

This application claims priority to Chinese Patent Application No. 202311820507.7, filed with the China National Intellectual Property Administration on December 26, 2023 and entitled "CONTROL METHOD AND RELATED DEVICE", and to Chinese Patent Application No. 202410357074.4, filed with the China National Intellectual Property Administration on March 26, 2024 and entitled "CONTROL METHOD AND RELATED DEVICE", both of which are incorporated herein by reference in their entireties.

### TECHNICAL FIELD

This application relates to the field of terminal technologies, and in particular, to a control method and a related device.

### BACKGROUND

An electronic device may support cellular communication functions of cellular communication, wireless fidelity (wireless-fidelity, WiFi) communication functions of Wi-Fi communication, and satellite communication functions of satellite communication.

In a possible implementation, when the electronic device is located in an area with poor cellular and/or Wi-Fi signal quality, the electronic device may be unable to access a cellular network and/or Wi-Fi. In this case, the electronic device can perform basic communication functions based on a satellite communication capability by directly connecting to a satellite. The satellite communication functions may be, for example, functions of receiving and sending messages, making a call, answering an incoming call, and the like.

However, in a possible implementation, satellite communication has high power consumption. When the electronic device uses satellite communication, a battery drains fast, affecting use experience of a user.

### SUMMARY

Embodiments of this application provide a control method and a related device that are used in the field of terminal technologies. An ultra power saving mode is enabled during satellite communication in a preset scenario, to save power and improve a battery life of the electronic device.

According to a first aspect, an embodiment of this application provides a control method. The method includes: When an electronic device uses a terrestrial network for communication in a first power consumption mode, if battery level information of the electronic device is a first battery level, and/or temperature information of the electronic device is a first temperature, the electronic device receives an operation used to enable a satellite network, where the first battery level is less than or equal to a first battery level threshold, and the first temperature is within a first temperature range; and in response to the operation used to enable the satellite network, the electronic device displays the first prompt information, switches from the first power consumption mode to the second power consumption mode, and uses the satellite network for communication in the second power consumption mode. The first prompt information is used to inform that the electronic device is to enter the second power consumption mode. Power consumption of the electronic device when running in the second power consumption mode is less than power consumption of the electronic device when running in the first power consumption mode. In this way, when the battery level is low and a user wants to use satellite communication, the electronic device can automatically enter an ultra power saving mode. This prolongs use duration of the electronic device and duration for satellite communication, simplifies a use operation of switching to the ultra power saving mode, and improves use experience of the user.

**In** a possible implementation, the method further includes: When the electronic device uses the terrestrial network for communication in the first power consumption mode, if the battery level information of the electronic device is a second battery level, and/or the temperature information of the electronic device is a second temperature, the electronic device receives the operation used to enable a satellite network, where the second battery level is less than or equal to a second battery level threshold, the second temperature is within the second temperature range, the second battery level threshold is greater than the first battery level threshold, and the second temperature is less than or equal to the first temperature; and in response to the operation used to enable a satellite network, the electronic device displays first prompt information, switches from the first power consumption mode to a second power consumption mode, and uses the satellite network for communication in the second power consumption mode. This can prolong duration of using satellite communication by the electronic device in a low-temperature scenario, simplify the user operation of switching to the ultra power saving mode, and improve the use experience of the user.

In a possible implementation, the method further includes: When the electronic device uses the satellite network for communication in the first power consumption mode, if the battery level information of the electronic device is the first battery level threshold, and/or the temperature information of the electronic device is the first temperature, the electronic device displays the first prompt information, switches from the first power consumption mode to the second power consumption mode, and uses the satellite network for communication in the second power consumption mode. In this way, when the battery level is low and the user wants to use satellite communication, the electronic device can automatically enter the ultra power saving mode. This prolongs the use duration of the electronic device and the duration for satellite communication, simplifies the user operation of switching to the ultra power saving mode, and improves the use experience of the user.

In a possible implementation, the method further includes: When the electronic device uses the satellite network for communication in the first power consumption mode, if the battery level information of the electronic device is the second battery level threshold, and/or the temperature information of the electronic device is the second temperature, the electronic device displays the first prompt information, switches from the first power consumption mode to the second power consumption mode, and uses the satellite network for communication in the second power consumption mode. This can prolong the duration of using satellite communication by the electronic device in the low-temperature scenario, simplify the user operation of switching to the ultra power saving mode, and improve the use experience of the user.

In a possible implementation, after the electronic device switches from the first power consumption mode to the second power consumption mode, the method includes: The electronic device displays a first interface, where the first interface includes a sign of the second power consumption mode, a control used to exit the second power consumption mode, second prompt information, a first pop-up window, and/or a status bar; the second prompt information is used to prompt for the battery level information of the electronic device, and available duration of performing satellite communication by the electronic device in the second power consumption mode; the first pop-up window includes prompt information used to inform that the satellite network has been accessed, a signal quality sign of the satellite network, position information of the electronic device, and a sign of a satellite position; and the status bar includes the battery level information of the electronic device and a sign of the satellite network. In this way, the electronic device can access the satellite network in the ultra power saving mode, thereby saving power and prolonging the use duration and standby duration.

In a possible implementation, after the electronic device displays the first interface, the method includes: The electronic device receives an operation used to exit the second power consumption mode, where the operation used to exit the second power consumption mode includes at least one of the following: a trigger operation on the control used to exit the second power consumption mode, and/or the battery level information of the electronic device is greater than a third battery level threshold; and that the electronic device uses the satellite network for communication in the first power consumption mode includes: In response to the operation used to exit the second power consumption mode, the electronic device switches from the second power consumption mode to the first power consumption mode, and uses the satellite network for communication in the first power consumption mode. In this way, when the battery level is low, the electronic device can switch to the ultra power saving mode, thereby prolonging the duration for satellite communication; when the battery level is high, the electronic device can exit the ultra power saving mode and provide the user with more functional services in a normal mode, improving the use experience of the user.

In a possible implementation, the first prompt information is further used to prompt for delay information of the electronic device entering the second power consumption mode; and the delay information is displayed in at least one of the following manners: fixedly displaying the delay information in the first prompt information, or decreasing the delay information in the first prompt information with time.. In this way, the electronic device can display prompt information for a period of time, to inform the user that the electronic device is to enter the ultra power saving mode later. In addition, in a process in which the electronic device displays the first prompt information, the electronic device can prompt, by decreasing the delay information, the user with a remaining time for switching to the ultra power saving mode, and switch to the ultra power saving mode when the delay information is 0.

In a possible implementation, the method further includes: When the electronic device uses the terrestrial network for communication in the first power consumption mode, the electronic device receives an operation used to switch to the second power consumption mode; in response to the operation used to switch to the second power consumption mode, the electronic device switches from the first power consumption mode to the second power consumption mode, and displays a second interface, where the second interface includes a sign of the second power consumption mode, the control used to exit the second power consumption mode, third prompt information, and/or the status bar; the third prompt information is used to prompt for the battery level information of the electronic device, and available duration of the electronic device in the second power consumption mode; and the status bar includes the battery level information of the electronic device and a sign of the terrestrial network; when the terrestrial network is used for communication in the second power consumption mode, and the battery level information of the electronic device is the first battery level, the electronic device receives an operation used to enable a satellite network; and in response to the operation used to enable a satellite network, the electronic device uses the satellite network for communication in the second power consumption mode. In this way, when the battery level information drops to a low value (for example, a current battery level is the first battery level, and the first battery level is less than 5%), the electronic device can continue using the ultra power saving mode to perform satellite communication, avoiding a scenario of forcibly exiting satellite communication when a battery level is low in a conventional technology. This increases use duration of satellite communication.

In a possible implementation, the using the satellite network for communication in the second power consumption mode includes: The electronic device accesses the satellite network in the second power consumption mode, and/or the electronic device uses the satellite network to perform a satellite communication service in the second power consumption mode, where the satellite communication service includes one or more of the following: a satellite call, reception and transmission of a satellite message, satellite video communication, and/or satellite voice communication. In this way, power can be saved when the electronic device in a standby state accesses the satellite network in the ultra power saving mode and/or during use of the satellite communication service, prolonging the satellite communication duration. In addition, satellite communication can support a plurality of communication services, enriching application scenarios of satellite communication and improving communication experience of the user.

In a possible implementation, the method further includes: When the electronic device uses the satellite network for communication in the first power consumption mode, the electronic device receives an operation used to exit the satellite network; in response to the operation used to exit the satellite network, the electronic device disconnects a connection to the satellite network; when being unable to access the terrestrial network, the electronic device displays a second pop-up window, where the second pop-up window includes a control used to switch to the second power consumption mode; and when receiving the trigger operation on the control used to switch to the second power consumption mode, the electronic device switches from the first power consumption mode to the second power consumption mode. In this way, when exiting satellite communication and being unable to access the terrestrial network, the electronic device can prompt, by using the second pop-up window, the user to enter the ultra power saving mode and use satellite communication, to ensure a communication service, thereby improving the use experience of the user.

According to a second aspect, an embodiment of this application provides an electronic device. The electronic device may also be referred to as a terminal device, a terminal (terminal), a user device (user equipment, UE), a mobile station (mobile station, MS), a mobile terminal (mobile terminal, MT), or the like. The electronic device may be a mobile phone (mobile phone), a smart television, a wearable device, a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in a remote medical surgery (remote medical surgery), a wireless terminal in smart grid (smart grid), a wireless terminal in transportation safety (transportation safety), a wireless terminal in a smart city (smart city), a wireless terminal in a smart home (smart home), or the like.

The electronic device includes: a processor and a memory. The memory stores computer-executable instructions. The processor executes the computer-executable instructions stored in the memory, to enable the electronic device to perform the method according to the first aspect.

According to a third aspect, an embodiment of this application provides a computer-readable storage medium. The computer-readable storage medium stores a computer program. The computer program is executed by a processor to implement the method according to the first aspect.

According to a fourth aspect, an embodiment of this application provides a computer program product. The computer program product includes a computer program, and when the computer program is run, a computer is enabled to perform the method according to the first aspect.

An embodiment of this application provides a chip system. The chip system includes at least one processor and a communication interface. The communication interface and the at least one processor are interconnected through a line. The at least one processor is configured to run a computer program or instructions, to perform the method according to the first aspect.

It should be understood that technical solutions of the second aspect to the fifth aspect of this application correspond to the technical solution of the first aspect of this application, and beneficial effects achieved in the aspects and corresponding feasible implementations are similar. Details are not described.

### BRIEF DESCRIPTION OF DRAWINGS

FIG. 1 is a diagram of a structure of an electronic device 100 according to an embodiment of this application;
FIG. 2 is a block diagram of a software structure of an electronic device 100 according to an embodiment of this application;
FIG. 3A to FIG. 3F are a diagram of interfaces for entering satellite communication according to an embodiment of this application;
FIG. 4 is a diagram of an interface on which satellite communication has been accessed according to an embodiment of this application;
FIG. 5A to FIG. 5D are a diagram of interfaces of satellite communication in an ultra power saving mode according to an embodiment of this application;
FIG. 6A to FIG. 6C are a diagram of interfaces for switching to an ultra power saving mode in a low-power satellite communication scenario according to an embodiment of this application;
FIG. 7A to FIG. 7C are a diagram of another interface for switching to an ultra power saving mode in a low-power satellite communication scenario according to an embodiment of this application;
FIG. 8A to FIG. 8C are a diagram of interfaces for switching to an ultra power saving mode in a low-power satellite communication scenario at a low temperature according to an embodiment of this application;
FIG. 9A to FIG. 9C are a diagram of another interface for switching to an ultra power saving mode in a low-power satellite communication scenario at a low temperature according to an embodiment of this application;
FIG. 10A to FIG. 10C are a diagram of interfaces for switching to an ultra power saving mode when there is no terrestrial network according to an embodiment of this application;
FIG. 11A and FIG. 11B are a schematic flowchart of switching to an ultra power saving mode in a low-power satellite communication scenario according to an embodiment of this application;
FIG. 12 is a schematic flowchart of switching to an ultra power saving mode in low-power satellite communication scenarios at different temperatures according to an embodiment of this application;
FIG. 13A and FIG. 13B are a schematic flowchart of switching to an ultra power saving mode in a low-power satellite communication scenario at a low temperature according to an embodiment of this application;
FIG. 14A and FIG. 14B are a diagram of interfaces for switching to an ultra power saving mode when there is no terrestrial network according to an embodiment of this application;
FIG. 15 is an internal interaction flowchart of an electronic device according to an embodiment of this application;
FIG. 16 is a schematic flowchart of a control method according to an embodiment of this application; and
FIG. 17 is a diagram of a structure of a control apparatus according to an embodiment of this application.

### DESCRIPTION OF EMBODIMENTS

To describe the technical solutions in embodiments of this application more clearly, the following briefly describes some terms and technologies used in embodiments of this application.

### 1. Electronic device

The electronic device in embodiments of this application may include a handheld device, a vehicle-mounted device, or the like with an image processing function. For example, some electronic devices are a mobile phone (mobile phone), a tablet computer, a palmtop computer, a notebook computer, a mobile Internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device (for example, a head unit), a wearable device, an electronic device in a 5G network, an electronic device in future evolved public land mobile communication (public land mobile network, PLMN), or the like. This is not limited in embodiments of this application.

As an example rather than a limitation, in embodiments of this application, the electronic device may alternatively be a wearable device. The wearable device may also be referred to as a wearable intelligent device, and is a general term of a wearable device that is intelligently designed and developed for daily wear by using a wearable technology, for example, a hearing aid, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-size devices that can implement complete or partial functions without depending on smartphones, such as smart watches or smart glasses, and devices that focus on only one type of application function and need to be used together with other devices such as smartphones, such as various smart bands or smart jewelry for monitoring physical signs.

In addition, in embodiments of this application, the electronic device may alternatively be an electronic device in an internet of things (internet of things, IoT) system. The IoT is an important part of future information technology development. A main technical feature of the IoT is connecting a thing by using a communication technology, to implement intelligence for human-machine interconnection and thing-thing interconnection.

In embodiments of this application, the electronic device may also be referred to as a terminal device, user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like.

### 2. User Interface

The user interface may also be briefly referred to as an interface. The interface may be understood as a medium interface for interaction and information exchange between an application or an operating system and a user, and implements conversion between an internal form of information and a form that can be accepted by the user. The user interface is usually represented in a form of a graphical user interface (graphical user interface, GUI), and is a user interface that is related to a computer operation and that is displayed in a graphic manner. It may be an interface element such as an icon, a window, or a control displayed on a display of the electronic device. The control may include a visual interface element such as an icon, a button, a menu, a tab, a text box, a dialog box, a status bar, a navigation bar, and a widget.

### 3. Other terms

In embodiments of this application, terms such as "example" or "for example" represent giving an example, an illustration, or a description. Any embodiment or design scheme described as an "example" or "for example" in this application should not be explained as being more preferred or having more advantages than another embodiment or design scheme. To be precise, the word such as "example" or "for example" is intended to present a related concept in a specific manner.

In embodiments of this application, "at least one" means one or more, and "a plurality of" means two or more. "And/or" describes an association relationship between associated objects, and indicates that three relationships may exist. For example, A and/or B may represent the following cases: Only A exists, both A and B exist, and only B exists. A and B each may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

It should be noted that "when ... " in embodiments of this application may be a moment when a specific case occurs, or a period of time after the case occurs. This is not specifically limited in embodiments of this application. In addition, a display interface provided in embodiments of this application is merely used as an example, and the display interface may further include more or less content.

In a possible implementation, when an electronic device is located in an area with poor cellular and/or Wi-Fi signal quality, the electronic device may be unable to access a cellular network and/or Wi-Fi. In this case, the electronic device can perform basic communication functions based on a satellite communication capability by directly connecting to a satellite. The satellite communication functions may be, for example, functions of receiving and sending messages, making a call, answering an incoming call, and the like.

However, in a possible implementation, power consumption of satellite communication is high. When satellite communication is used, a battery of the electronic device drains fast, affecting user experience of a user. In some possible implementations, the electronic device does not support satellite communication when a battery level is low. For example, when satellite communication is used when the battery level is low, the electronic device displays a prompt pop-up window. A text in the prompt pop-up window may be, for example, "The current battery level is very low, which will affect the stability of satellite communication. It is recommended to charge the device and ensure that the battery level is above 5% for use" or "The current battery level is below 5%. The satellite communication will exit in 25 seconds".

It may be understood that, when being unable to connect to a terrestrial network (for example, a cellular network and a Wi-Fi network), the electronic device may be connected to satellite communication. A satellite service may not support a data service. For example, the satellite service may support applications related to call, messaging, and the like, and running of the applications such as call, and messaging may not depend on the data service. In addition, when the terrestrial network cannot be connected, some applications that require internet connectivity on the electronic device cannot run normally. Therefore, in a limited-power or low-power scenario, the electronic device may support call and messaging functions without running the applications that require internet connectivity. This reduces power consumption, to provide the electronic device with a satellite connection and a satellite call as long as possible.

In view of this, an embodiment of this application provides a control method, to associate satellite communication with an ultra power saving mode. For example, when a battery level and/or a temperature of an electronic device are/is lower than a specific threshold, the ultra power saving mode is automatically enabled. Alternatively, when it is detected that there is no cellular network or Wi-Fi, and the electronic device has previously used satellite communication, a user may be prompted by using an interface to select to enter the ultra power saving mode. In this way, the user can use satellite communication in the ultra power saving mode, to reduce power consumption and prolong a use time of the electronic device.

To better understand embodiments of this application, the following describes a structure of an electronic device in embodiments of this application.

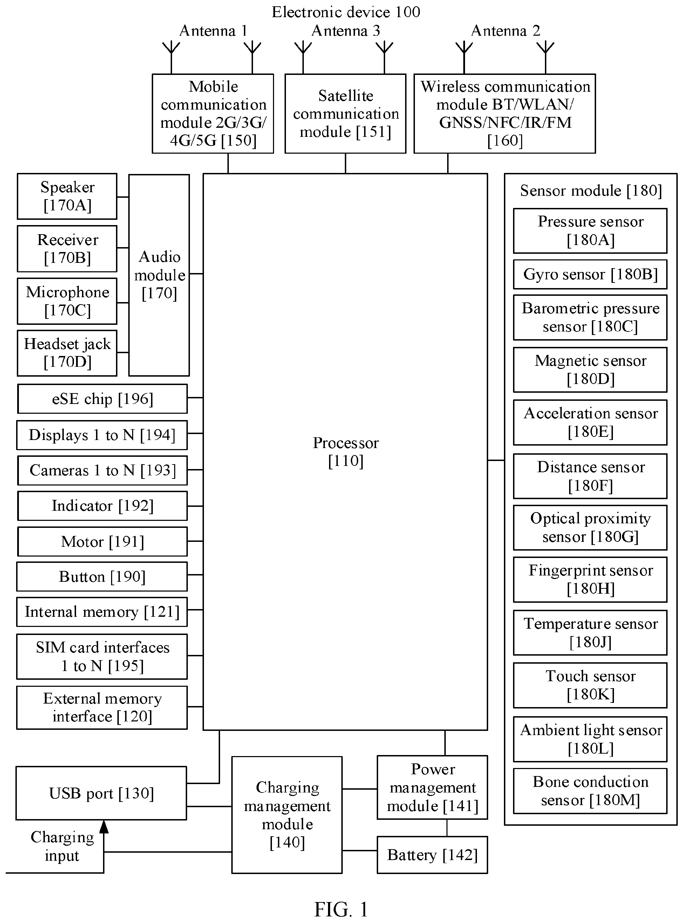

FIG. 1 is a diagram of a structure of an electronic device 100. The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, an antenna 3, a mobile communication module 150, a wireless communication module 160, a satellite communication module 151, an audio module 170, a speaker 170A, a receiver 170B, a microphone 170C, a headset jack 170D, a sensor module 180, a key 190, a motor 191, an indicator 192, a camera 193, a display 194, a subscriber identification module (subscriberidentification module, SIM) card interface 195, an embedded security chip (embedded secure element, eSE) 196, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, or the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or there may be a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processingunit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors.

The power management module 141 is configured to connect the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor a parameter like a battery capacity, a battery cycle count, or a battery health status (electric leakage or impedance). In some other embodiments, the power management module 141 may alternatively be disposed in the processor 110. In some other embodiments, the power management module 141 and the charging management module 140 may alternatively be provided in a same device. In embodiments of this application, the power management module 141 may be configured to execute a power saving strategy in an ultra power saving mode, to reduce power consumption.

A wireless communication function of the electronic device 100 may be implemented via the antenna 1, the antenna 2, the mobile communication module 150, the wireless communication module 160, the modem processor, the baseband processor, and the like.

In this embodiment of this application, the electronic device 100 may further include a satellite communication module 151. A satellite communication function of the electronic device 100 may be implemented by using the antenna 3, the satellite communication module, and the like. The antenna 3 may be an antenna different from the antenna 1 and the antenna 2. The antenna 3 may further reuse the antenna 1 and/or the antenna 2. This is not limited in this embodiment of this application.

The electronic device 100 implements a display function through the GPU, the display 194, the application processor, and the like. The display 194 is configured to display an image, a video, and the like. In this embodiment of this application, the display 194 may be configured to display a satellite communication interface, and assist, by using corresponding prompt information on the interface, a user in adjusting a posture of holding a terminal, to quickly establish satellite communication.

The temperature sensor 180J is configured to detect a temperature. In some embodiments, the electronic device 100 executes a temperature processing strategy through the temperature detected by the temperature sensor 180J. For example, when the temperature reported by the temperature sensor 180J exceeds a threshold, the electronic device 100 lowers performance of a processor near the temperature sensor 180J, to reduce power consumption for thermal protection. In some other embodiments, when the temperature is lower than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature. In this embodiment of this application, the temperature sensor 180J may be configured to report temperature information of the electronic device, and determine, based on the temperature information, a battery level threshold corresponding to a current temperature. When a battery level reaches the battery level threshold, the electronic device can enter the ultra power saving mode.

A software system of the electronic device 100 may use a layered architecture, an event-driven architecture, a microkernel architecture, a micro service architecture, a cloud architecture, or the like. In this embodiment of this application, an Android system with a layered architecture is used as an example to describe a software structure of the electronic device 100.

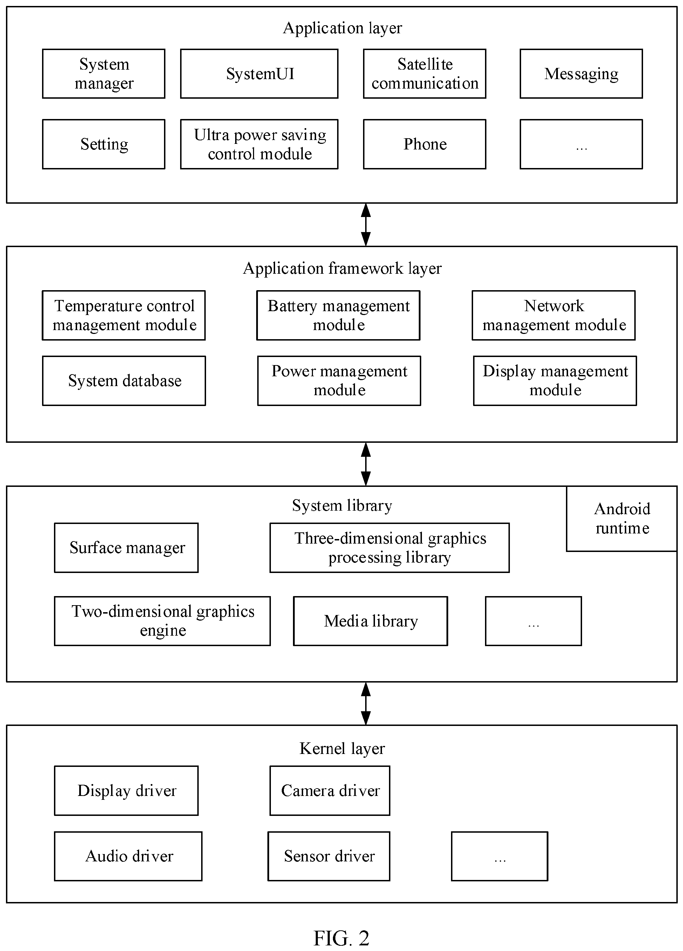

FIG. 2 is a block diagram of a software structure of an electronic device 100 according to an embodiment of this application.

In a layered architecture, software is divided into several layers, and each layer has a clear role and task. The layers communicate with each other through a software interface. In some embodiments, an Android system may include: an application layer (applications), an application framework layer (application framework), a system library, and a kernel layer (kernel). The kernel layer may be a driver layer.

The application layer may include a series of application packages.

As shown in FIG. 2, the application packages may include a system manager module, a system user interface (SystemUI), a satellite communication application, a messaging application, a setting application, an ultra power saving control module, a phone application, and the like.

The system manager module may be configured to determine, based on information such as battery level information, temperature information, a network status, and a satellite mode, whether to use an ultra power saving mode. The network status may be that, for example, a cellular network is enabled or disabled, a Wi-Fi network is enabled or disabled, or the like. The satellite mode may be, for example, enabled satellite communication, and disabled satellite communication.

SystemUI belongs to an Android application package (Android applicationpackage, APK), and can be used to display status bar information, display a notification panel, provide a screenshot service, provide a wallpaper service, and the like. In this embodiment of this application, after the electronic device switches to the ultra power saving mode, SystemUI may be used to display an interface in a dark mode, for example, a wallpaper or a desktop in the dark mode.

The satellite communication application may be used to provide a satellite communication service.

The ultra power saving control module may be configured to execute an ultra power saving strategy, so that the electronic device switches to the ultra power saving mode.

Optionally, entry to enable a satellite communication function may be set in the setting application. For example, the setting application may include a satellite communication setting item. After receiving a tap operation on the satellite communication setting item, the electronic device can enable or disable the satellite communication function.

The application framework layer provides an application programming interface (application programming interface, API) and a programming framework for an application at the application layer. The application framework layer includes some predefined functions.

As shown in FIG. 2, the application framework layer may include a temperature control management module, a battery management module, a network management module, a system database, a power management module (also referred to as a battery management service, a power manager service, PMS), a display management module, and the like.

The temperature control management module may be configured to obtain the temperature information. The battery management module may be configured to obtain battery level information and charging state information of a battery. The network management module may be configured to manage a cellular network and a Wi-Fi network, disable near field communication (near field communication, NFC), and the like. The system database may be used to manage a satellite communication service. The power management module may be configured to: manage a power supply in a normal mode, to consume power normally; and control the power supply in the ultra power saving mode, to reduce power consumption. The display management module is configured to control luminance of the display.

The system library may include a plurality of library modules, for example, Android runtime, a surface manager, a three-dimensional graphics processing library, a two-dimensional graphics engine, and a media library.

The kernel layer is a layer between hardware and software. The kernel layer is used to drive the hardware, to enable the hardware to work. The kernel layer may include a display driver, a camera driver, an audio driver, a sensor driver, and the like. This is not limited in embodiments of this application. The hardware layer may include various types of sensors, such as a temperature sensor. The hardware layer may further include a display panel, and the like.

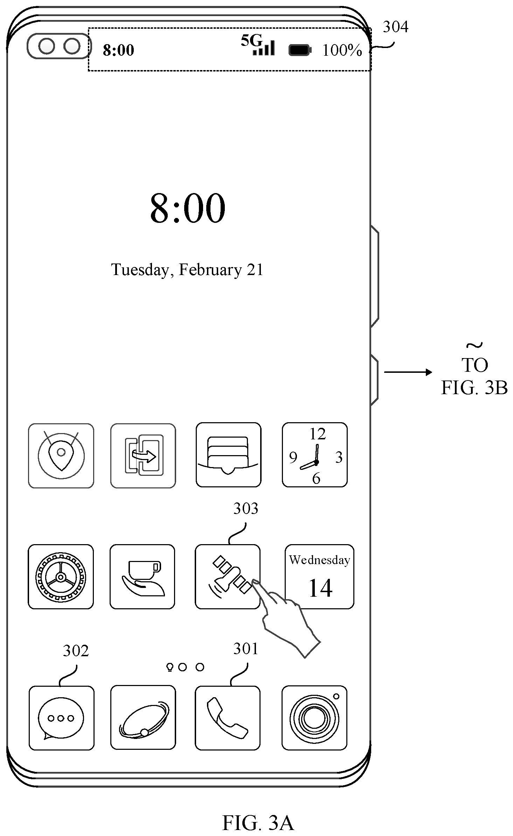

The following first describes, with reference to FIG. 3A to FIG. 3F, a process in which an electronic device enters satellite communication in an embodiment of this application. As shown in FIG. 3A to FIG. 3F:

When the electronic device is powered on and/or unlocked, the electronic device can display a desktop, as shown on an interface in FIG. 3A. The desktop may include a status bar 304, time and date information, icons of a plurality of applications, and the like.

The status bar 304 can display time information, network quality information, battery level information, and the like. For example, the network quality information is, for example, accessing a 5G cellular network with four signal bars. The battery level information is, for example, 100%. The icons of the plurality of applications may be, for example, an icon 301 of a phone application, an icon 302 of a messaging application, an icon 303 of a satellite communication application, and the like. The phone application may be used to make a call with another device. The messaging application may be used to receive and send messages. The satellite communication application may be used to perform a service such as a call, and receiving and sending messages after being connected to a satellite.

In some embodiments, when a remaining battery level of the electronic device is sufficient, the remaining battery level can support the electronic device in performing a satellite communication service, and the electronic device can perform satellite communication by using a common procedure, without optimizing a use scenario of a battery level.

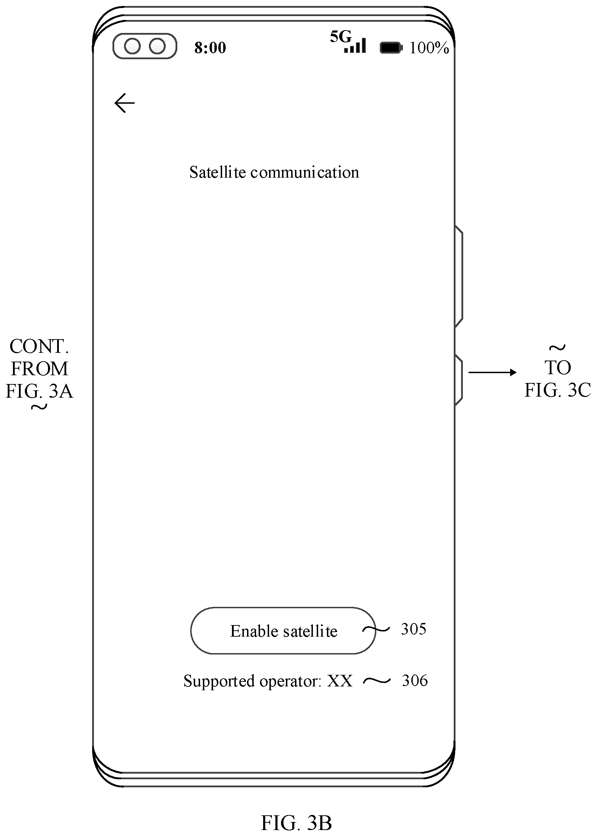

For example, on the interface shown in FIG. 3A, when receiving a trigger operation on the icon 303 of the satellite communication application, the electronic device can start the satellite communication application, and display a satellite enabling interface. The satellite enabling interface may be an interface shown in FIG. 3B. The trigger operation may be a tap operation and/or a slide operation.

On the interface shown in FIG. 3B, the electronic device can display an enable satellite control 305. The enable satellite control 305 may be used to access the satellite. Optionally, the enable satellite control 305 may include information indicating a satellite type. For example, the satellite type may be "Tiantong satellite" (not shown on an interface shown in FIG. 3B).

The interface shown in FIG. 3B may further display a sign 306 that indicates a type of a subscriber identity card (subscriber identity module, SIM) or an operator to which the subscriber identity module card belongs. The sign 306 can be used to reduce a probability that a user inserts a subscriber identity card that does not support satellite communication, can be used to further reduce a probability that a satellite connection failure occurs because the subscriber identity card inserted into the electronic device does not support satellite communication, and can be used to further reduce a probability that power consumption of the electronic device increases due to an ineffective satellite connection caused because the subscriber identity card does not support satellite communication.

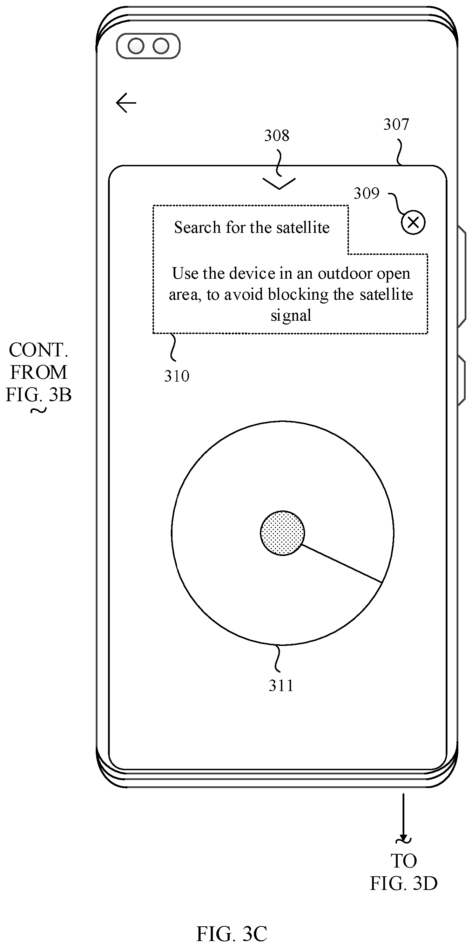

On the interface shown in FIG. 3B, when receiving a trigger operation on the enable satellite control 305, the electronic device can search for a satellite signal (which may also be referred to as a satellite search). In a satellite search process, the electronic device can display a satellite search interface, and the satellite search interface may be, for example, an interface shown in FIG. 3C. On the interface shown in FIG. 3C, the electronic device can display a pop-up window 307. The pop-up window 307 includes a hide control 308, a close control 309, prompt information 310, and an animation 311 indicating that a satellite search is in progress. The hide control 308 may be used to hide the pop-up window 307. The close control 309 may be used to close the pop-up window 307. The prompt information 310 may be, for example, "Search for the satellite. Use the device in an outdoor open area, to avoid blocking the satellite signal". The prompt information 310 may be used to guide a posture or an action of holding the electronic device by a user, to quickly complete the satellite search, so that the user can perform communication in a timely manner by using a satellite communication function.

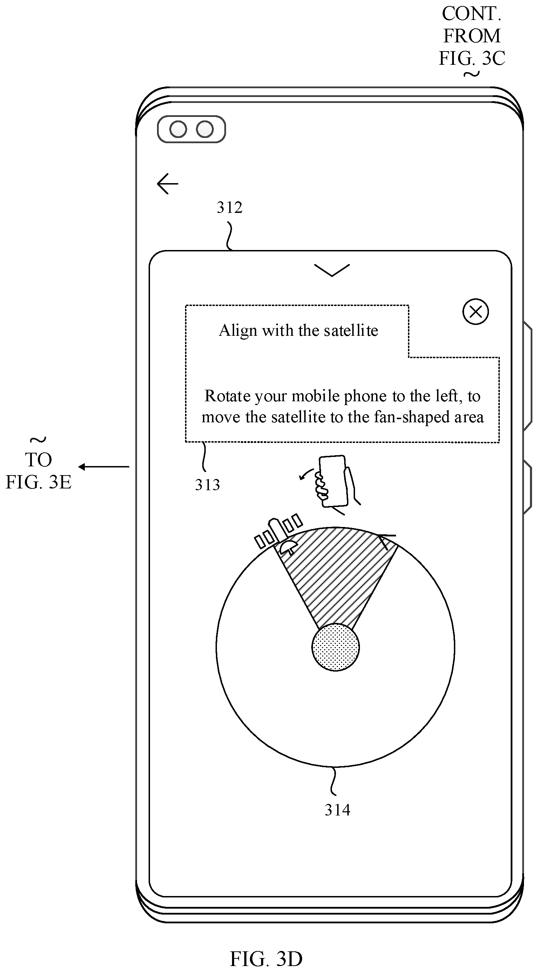

When the electronic device is in a satellite search process shown on the interface in FIG. 3C, if the electronic device completes the satellite search, the electronic device can align with the satellite (which may also be referred to as satellite alignment), and display a satellite alignment interface. The satellite alignment interface may be, for example, an interface shown in FIG. 3D. On the interface shown in FIG. 3D, the electronic device can display a pop-up window 312. The pop-up window 312 may include a hide control, a close control, prompt information 313, and an animation 314 indicating that satellite alignment is in progress. The prompt information 313 may be, for example, "Align with the satellite. Rotate your phone to the left, to move the satellite to the fan-shaped area". The prompt information 313 may be used to guide a posture or an action of holding the electronic device by the user, to quickly complete the satellite alignment, so that the user can perform communication in a timely manner by using the satellite communication function.

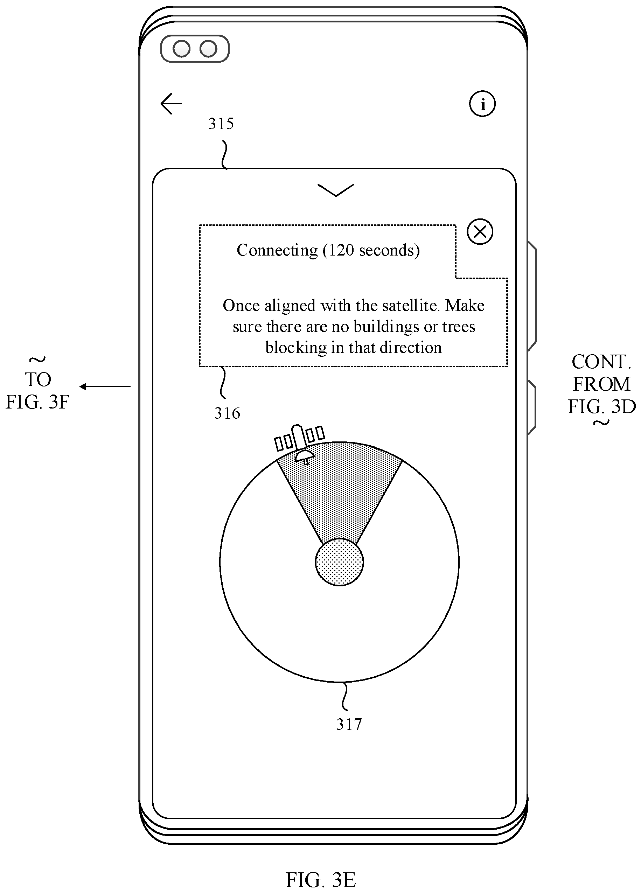

When the electronic device is in a satellite alignment process shown on the interface in FIG. 3D, if the electronic device completes the satellite alignment, the electronic device can perform the communication connection to the satellite, and display a satellite connection interface. The satellite connection interface may be, for example, an interface shown in FIG. 3E. On the interface shown in FIG. 3E, the electronic device can display a pop-up window 315. The pop-up window 315 may include a hide control, a close control, prompt information 316, and an animation 317 indicating that a communication connection is in progress. The prompt information 316 may be, for example, "Connecting (120 seconds). Once aligned with the satellite. Make sure there are no buildings or trees blocking in that direction". The prompt information 316 may be used to display a progress of accessing the satellite to the user, so that user experience can be improved.

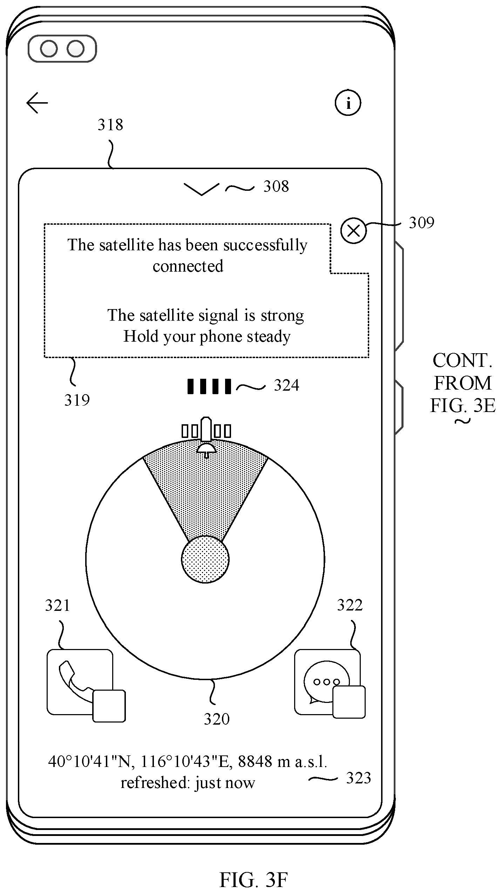

When the electronic device is in a process of performing a satellite communication connection as shown on the interface in FIG. 3E, if the electronic device completes the communication connection, the electronic device can display a satellite communication interface. The satellite communication interface may be, for example, an interface shown in FIG. 3F. On the interface shown in FIG. 3F, the electronic device can display a pop-up window 318. The pop-up window 318 may include a hide control 308, a close control, prompt information 319, an animation 320 indicating a completed connection, an icon 321 of the phone application, an icon 322 of the messaging application, prompt information 323, and satellite quality information 324.

The prompt information 319 may indicate that the satellite communication connection is completed. The prompt information 319 may be, for example, "The satellite has been successfully connected. The satellite signal is strong. Hold your phone steady". The prompt information 323 may indicate position information of the electronic device. For example, the prompt information 323 may be, for example, "40°10'41"N, 116°10'43"E, altitude 8848m a.s.l., refreshed: just now". The satellite quality information 324 may be indicated in a form of signal bars. For example, the satellite has currently four signal bars, indicating that satellite signal is currently strong.

It should be noted that, when the electronic device does not access the satellite, the electronic device can display the icon 301 of the phone application and the icon 302 of the messaging application on the interface shown in FIG. 3A, and the phone application and the messaging application may perform corresponding communication services based on a cellular network and/or Wi-Fi. It should be noted that, when the electronic device accesses the satellite, the electronic device can display the icon 321 of the phone application and the icon 322 of the messaging application on the interface shown in FIG. 3F, and the phone application and the messaging application may perform corresponding communication services for the satellite.

For ease of distinguishing between the two cases, in this embodiment of this application, the icon 321 of the phone application is different from the icon 301 of the phone application, and the icon 322 of the messaging application is different from the icon 302 of the messaging application. For example, the icon 321 of the phone application is based on the icon 301 of the phone application, and a satellite sign or another sign is added to a lower right corner of the icon 301 of the phone application; the icon 322 of the messaging application is based on the icon 302 of the messaging application, and a satellite sign or another sign is added to a lower right corner of the icon 302 of the messaging application. However, during actual application, the icon 321 of the phone application may alternatively be the same as the icon 301 of the phone application, and the icon 322 of the messaging application may alternatively be the same as the icon 302 of the messaging application. This is not limited in this embodiment of this application. In addition, the interface shown in FIG. 3F may further include an icon of another application. This is not limited in this embodiment of this application.

Optionally, in a process of displaying the interface shown in FIG. 3C to the interface shown in FIG. 3F, the electronic device can hide the pop-up window by using the hide control, improving aesthetics and simplicity of the interface. The following uses an example in which the pop-up window 318 is hidden on the interface shown in FIG. 3F.

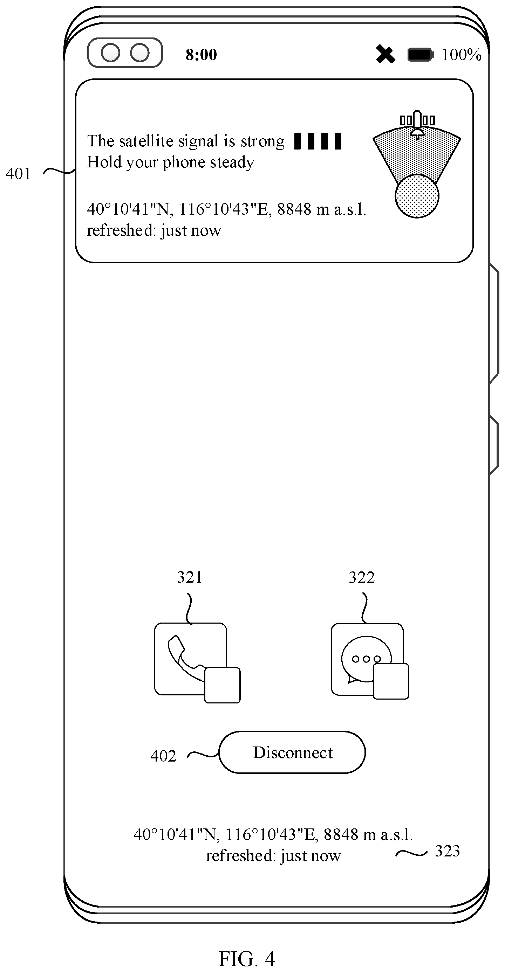

In some embodiments, on the interface shown in FIG. 3F, when receiving a trigger operation on the hide control 308, the electronic device can display a satellite communication interface shown in FIG. 4. On the interface, the pop-up window 318 in an expanded state is switched to a pop-up window 401 in a hidden state. The pop-up window 401 may include some elements in the pop-up window 318 in the expanded state. For example, the pop-up window 401 includes the prompt information 319, the prompt information 323, the satellite quality information 324, the animation 320 indicating that a completed connection, and the like.

In addition, on the interface shown in FIG. 4, the electronic device can further display the icon 321 of the phone application, the icon 322 of the messaging application, and a disconnect control 402. The disconnect control 402 may be used to control the electronic device to disconnect a communication connection to the satellite. Optionally, at the bottom of the interface shown in FIG. 4, updated prompt information 323 may be further displayed in real time.

Optionally, in this embodiment of this application, the disconnect control 402 may be displayed on the interface shown in FIG. 4. To improve simplicity of the interface, the electronic device may alternatively not display the disconnect control 402 on the interface. When the user wants to cancel satellite communication, the electronic device may expand the pop-up window based on a trigger operation on the pop-up window 401, and display the interface shown in FIG. 3F. The electronic device receives a trigger operation on the close control 309 on the interface shown in FIG. 3F. In response to the operation, the electronic device disconnects a communication link to the satellite, and exits satellite communication. A location of the control for disabling satellite communication and the method for disabling satellite communication are not limited in this embodiment of this application.

On the interface shown in FIG. 4 or the interface shown in FIG. 3F, the electronic device can perform satellite communication by using the phone application and/or the messaging application. After the user ends a call and/or ends receiving and sending messages, the electronic device can display the interface shown in FIG. 4 or the interface shown in FIG. 3F.

In this case, the electronic device can use the satellite for satellite communication.

It should be noted that, in this embodiment of this application, a manner of entering satellite communication is described only by using an example in which the satellite communication application is started on the desktop. During actual application, a control center interface of the electronic device may include a satellite communication shortcut control, and/or a setting application may include a satellite communication setting item. The electronic device can quickly start the satellite communication application based on an operation of tapping the satellite communication shortcut control on the control center interface. The electronic device can alternatively quickly start the satellite communication application based on a tap operation on the satellite communication setting item in the setting application. This is not limited in this embodiment of this application.

The foregoing embodiment shows a manner in which the electronic device accesses the satellite when the battery level is sufficient according to this embodiment of this application. In this embodiment of this application, to increase duration for providing satellite communication with the remaining battery level, the electronic device can enable an ultra power saving mode based on a user operation and perform satellite communication. Alternatively, when meeting a preset condition, the electronic device can automatically switch to the ultra power saving mode and perform satellite communication.

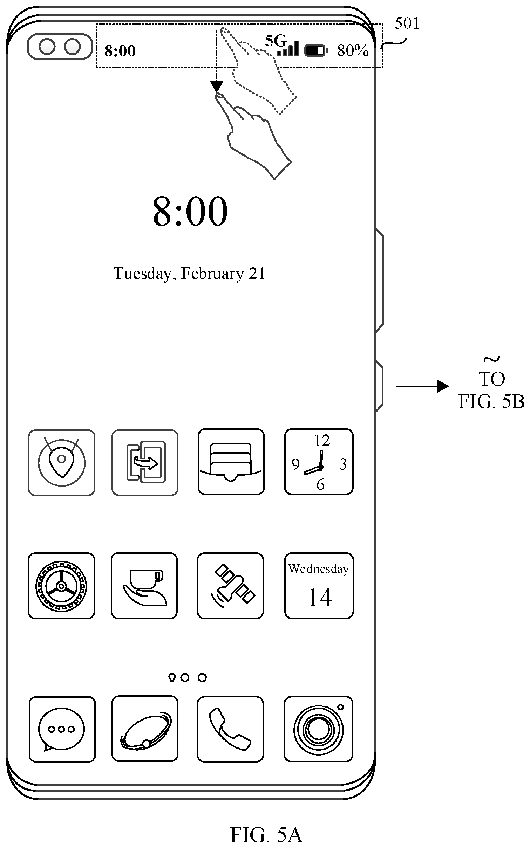

The following first describes, with reference to FIG. 5A to FIG. 5D, a process of enabling the ultra power saving mode based on the user operation and performing satellite communication. FIG. 5A to FIG. 5D are a diagram of interfaces of satellite communication in an ultra power saving mode according to an embodiment of this application. As shown in FIG. 5A to FIG. 5D:

The electronic device can display an interface shown in FIG. 5A. The interface may include a status bar 501. The status bar 501 may include time information, network quality information, battery level information, and the like. For example, the battery level information is 80%.

The electronic device can enter the ultra power saving mode based on an ultra power saver control. The ultra power saver control may be a shortcut control that is on the control center interface and that is used to enter the ultra power saving mode. The ultra power saver control may alternatively be a setting item that is in the setting application and that is used to enter the ultra power saving mode. The ultra power saver control may alternatively be a control of entering the ultra power saving mode in another form. This is not limited in this embodiment of this application.

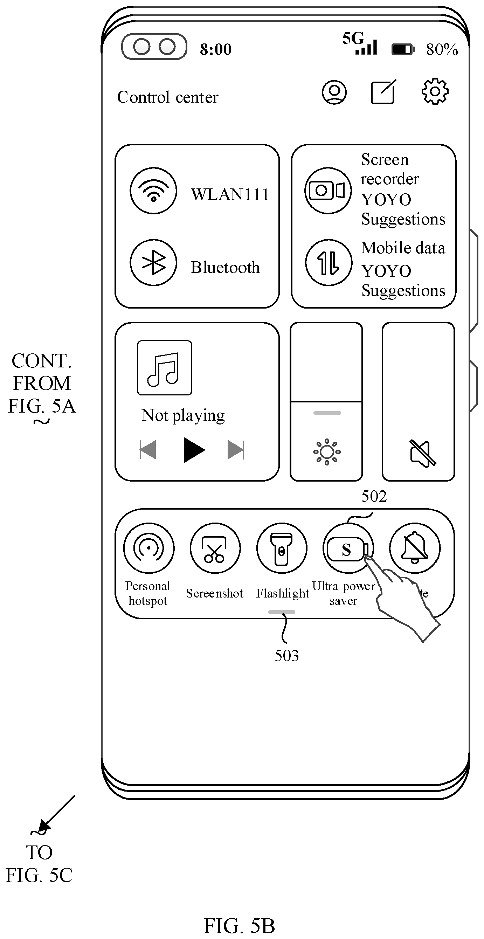

For example, an example in which the electronic device enters the ultra power saving mode based on the ultra power saver control on the control center interface is used. On the interface shown in FIG. 5A, when receiving a trigger operation of sliding downward from the top of a screen, the electronic device can display the control center interface, as shown on an interface shown in FIG. 5B. On the interface shown in FIG. 5B, the electronic device can display a plurality of shortcut controls, and the plurality of shortcut controls include, for example, an ultra power saver control 502. It may be understood that, in some embodiments, the ultra power saver control may not be displayed on the control center interface shown in FIG. 5B, and the electronic device can find the ultra power saver control 502 in all shortcut controls based on a more control 503. This is not limited in this embodiment of this application.

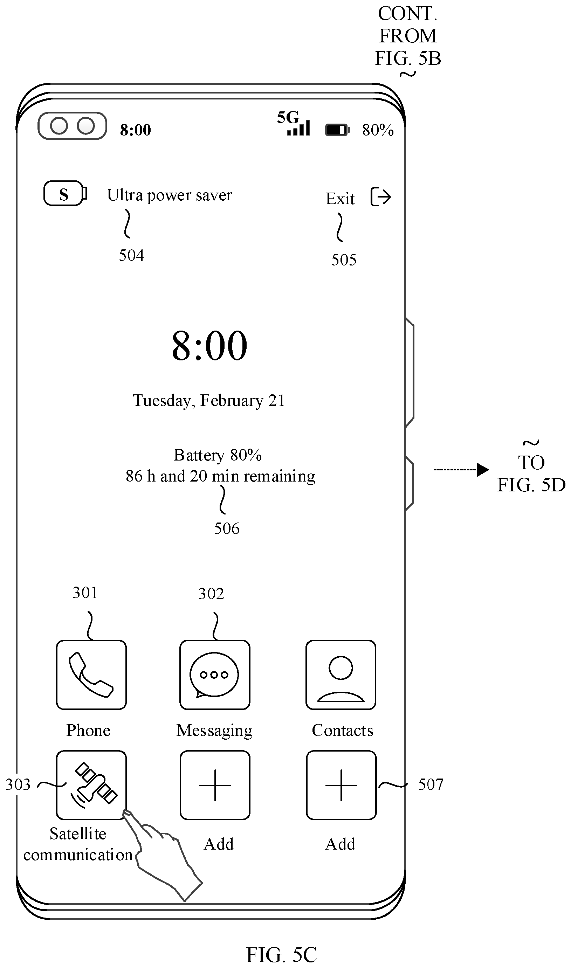

In an interface shown in FIG. 5B, when receiving a trigger operation on the ultra power saver control 502, the electronic device can enter the ultra power saving mode, as shown on an interface shown in FIG. 5C. The interface displays an ultra power saver sign 504, an exit control 505, prompt information 506, icons of a plurality of applications, and an add control 507. The ultra power saver sign 504 indicates that the electronic device is currently in the ultra power saving mode. The exit control 505 may be used to control the electronic device to exit the ultra power saving mode. The prompt information 506 may be used to prompt for remaining battery level information and remaining battery duration. The prompt information 506 may be, for example, "Battery 80%. 86 h 20 min remaining". The icons of the plurality of applications may include, for example, the icon 301 of the phone application, the icon 302 of the messaging application, the icon 303 of the satellite communication application, and the like. The add control 507 may be used to add an application for use in the ultra power saving mode.

On the interface shown in FIG. 5C, the electronic device is in the ultra power saving mode, and the user may use satellite communication to make a call and/or receive and send messages. After receiving a trigger operation on the icon 303 of satellite communication, the electronic device may perform an operation such as searching for the satellite, aligning with the satellite, and connecting to the satellite, and use the satellite for communication after being successfully connected to the satellite. For this process, refer to the related descriptions in the embodiment shown in FIG. 3A to FIG. 3F. For example, after the electronic device displays the interface shown in FIG. 3B, the electronic device enters the satellite search process in response to the trigger operation on the enable satellite control 305; after the electronic device displays the interface shown in FIG. 3C, and the satellite signal is found, the electronic device enters the satellite alignment process; after the electronic device displays the interface shown in FIG. 3D, and the electronic device aligns with the satellite, the electronic device enters the satellite connection process; after the electronic device displays the interface shown in FIG. 3E and accesses the satellite, the electronic device displays the interface shown in FIG. 3F, and implements satellite communication.

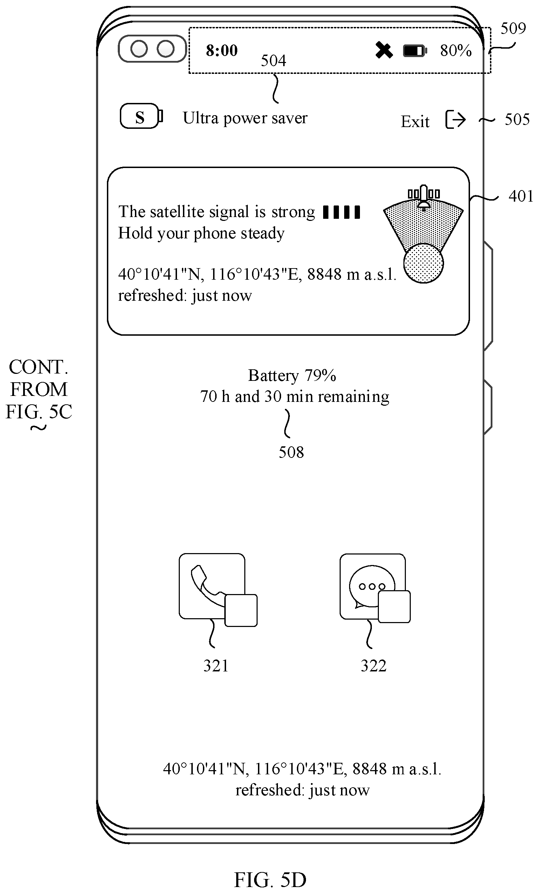

It may be understood that, for a process indicated by a dashed arrow from the interface shown in FIG. 5C to the interface shown in FIG. 5D, refer to a process from the interface shown in FIG. 3B to the interface shown in FIG. 4. This is not described in detail in this embodiment of this application.

After being connected to the satellite, the electronic device can display an interface shown in FIG. 5D. The interface may include the ultra power saver sign 504, the exit control, a pop-up window 508, prompt information 508, icons of a plurality of applications, a notification bar 509, and the like.

A form and content of the pop-up window 401 on the interface shown in FIG. 5D are the same as or similar to those of the pop-up window 401 on the interface shown in FIG. 4. Available duration in the prompt information 508 may be available duration for which satellite communication runs at a remaining battery level. The icons of the plurality of applications may be, for example, icons of applications that support satellite communication, such as the icon 321 of the phone application and the icon 322 of the messaging application.

It should be noted that available duration of the battery level in the ultra power saving mode before enabling of satellite communication may be different from available duration of the battery level in the ultra power saving mode after enabling of satellite communication. For example, before enabling of satellite communication, the electronic device can display prompt information 506 in the ultra power saving mode. The prompt information 506 may be available duration of the electronic device in the ultra power saving mode. After enabling of satellite communication, the electronic device can display prompt information 508 in the ultra power saving mode. The prompt information 508 may be available duration of performing satellite communication by the electronic device in the ultra power saving mode. For example, the prompt information 508 may be, for example, "Battery 79%. 70 h 30 min remaining", and the prompt information 508 may alternatively be, for example, "Battery 79%. Satellite communication for 70 h and 30 min with the remaining battery level". The available duration may be obtained based on a power consumption status of the satellite communication application and the remaining battery level. This is not limited in this embodiment of this application.

The notification bar 509 may include time information, network quality information, battery level information, and the like. The network quality information in the notification bar 509 may indicate a currently accessed satellite. Optionally, the notification bar 509 can display a sign of accessing the cellular network and/or a sign of accessing the Wi-Fi. Optionally, the notification bar 509 cannot display the sign of accessing the cellular network and/or the sign of accessing the Wi-Fi. This is not limited in this embodiment of this application.

In this case, the electronic device can perform satellite communication in the ultra power saving mode. This can prolong available duration of the battery level, and further prolong satellite communication duration of the electronic device.

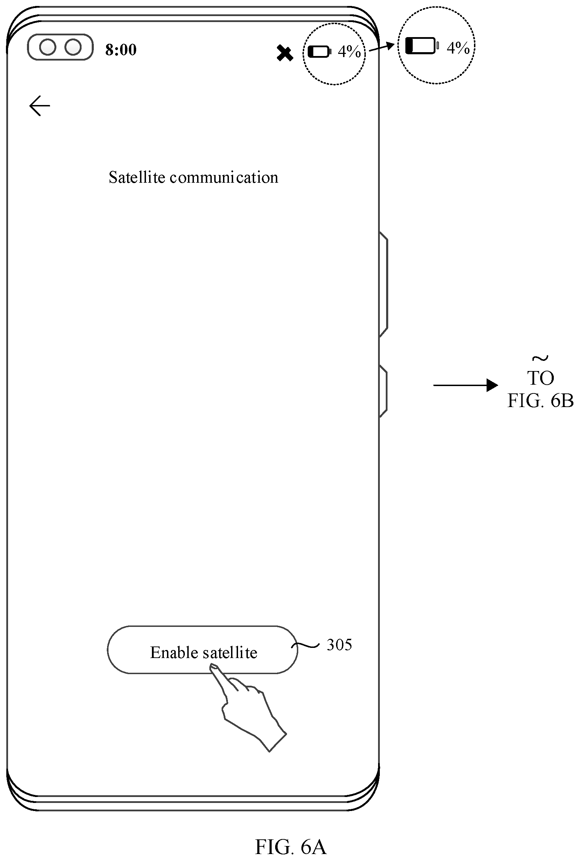

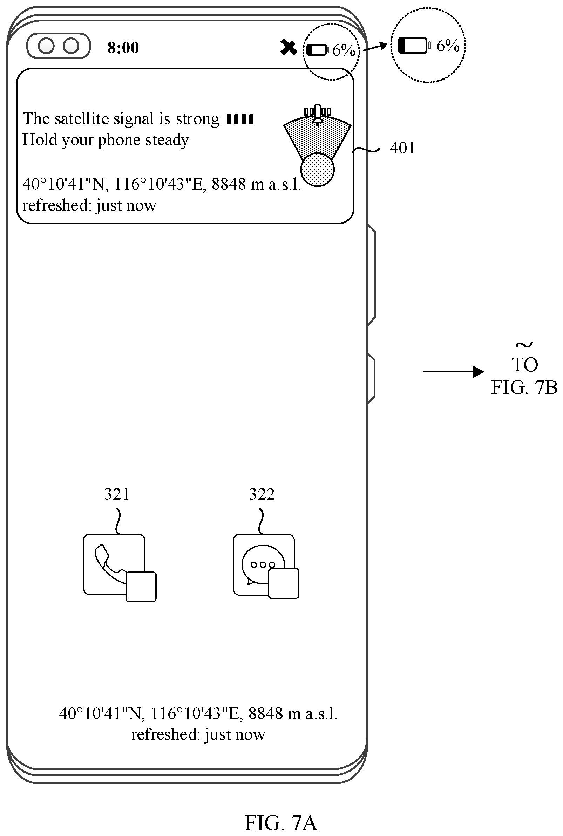

The following describes, with reference to FIG. 6A to FIG. 6C and FIG. 7A to FIG. 7C, a process in which the electronic device automatically switches to the ultra power saving mode and performs satellite communication under the preset condition in an embodiment of this application.

FIG. 6A to FIG. 6C are a diagram of interfaces of satellite communication in an ultra power saving mode according to an embodiment of this application. As shown in FIG. 6A to FIG. 6C:

In some scenarios, the remaining battery level of the electronic device is low, and the user needs to use the satellite for communication. When the remaining battery level is less than or equal to a first battery level threshold, the electronic device can automatically enter the ultra power saving mode. The first battery level threshold is, for example, 5%.

In some embodiments, after receiving a tap on the icon of the satellite communication application by the user, the electronic device can display an interface shown in FIG. 6A. On the interface shown in FIG. 6A, the electronic device displays the enable satellite control 305 and a status bar. The status bar displays battery level information. For example, the remaining battery level is 4% shown as a battery level in a dashed line circle.

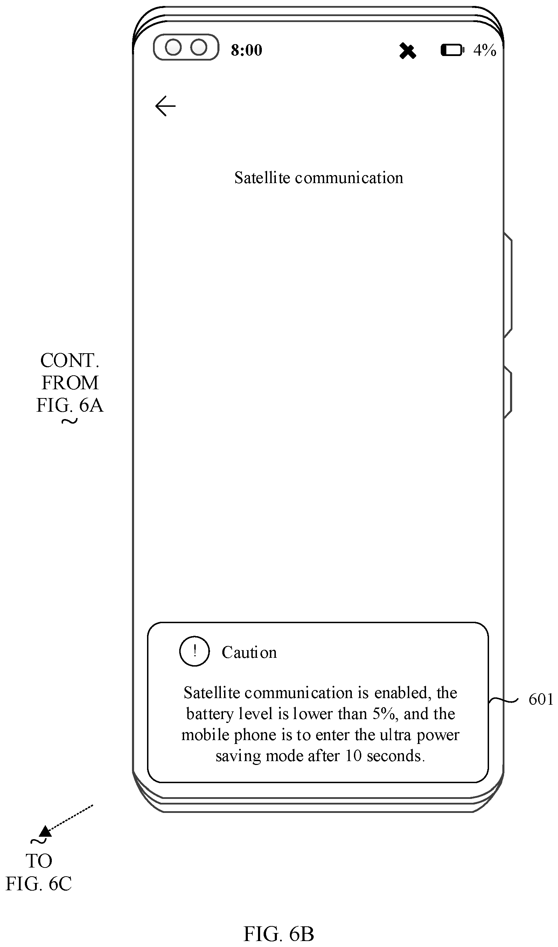

On the interface shown in FIG. 6A, when receiving a trigger operation on the enable satellite control 305, the electronic device can display an interface shown in FIG. 6B. The interface shown in FIG. 6B can display prompt information 601. The prompt information 601 is used to notify the user that the electronic device is to automatically enter the ultra power saving mode. The prompt information 601 may be, for example, "Satellite communication is enabled, the battery level is lower than 5%, and the mobile phone is to enter the ultra power saving mode after 10 seconds". The prompt information 601 may be displayed at the bottom of the screen in a form of a pop-up window, or the prompt information 601 may be displayed at another location in another form.

It may be understood that, on the interface shown in FIG. 6B, the remaining battery level (4%) is less than the first battery level threshold (5%). Therefore, after the electronic device identifies an intention of the user to use satellite communication (for example, the user taps the enable satellite control 305), the electronic device automatically enters the ultra power saving mode.

After entering the ultra power saving mode, the electronic device may perform a step of accessing the satellite.

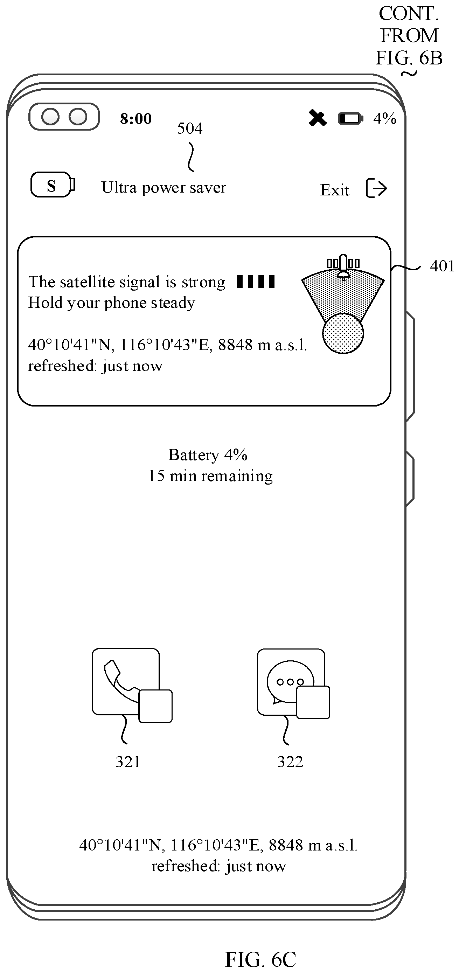

In a possible implementation, a process in which the electronic device displays an interface shown in FIG. 6C from the interface shown in FIG. 6B may be as follows: After a time for displaying the prompt information 601 on the interface shown in FIG. 6B reaches 10s, the electronic device can display the interface shown in FIG. 3B. Then, the electronic device can complete the satellite connection process with reference to the steps related to the interface shown in FIG. 3B to the interface shown in FIG. 3F, and display the interface shown in FIG. 6C.

In another possible implementation, a process in which the electronic device displays an interface shown in FIG. 6C from the interface shown in FIG. 6B may be as follows: After a time for displaying the prompt information 601 on the interface shown in FIG. 6B reaches 10s, the electronic device can display the interface shown in FIG. 3C. Then, the electronic device can complete the satellite connection process with reference to the steps related to the interface shown in FIG. 3C to the interface shown in FIG. 3F, and display the interface shown in FIG. 6C.

In the foregoing two possible implementations, after entering the ultra power saving mode, the electronic device can continue performing a subsequent operation of accessing the satellite, and a related step of accessing the satellite does not need to be repeated, thereby simplifying a user operation. In some other embodiments, when switching to the ultra power saving mode, the electronic device can disable satellite communication. After entering the ultra power saving mode, the electronic device needs to restart the satellite communication application.

In still another possible implementation, a process in which the electronic device displays an interface shown in FIG. 6C from the interface shown in FIG. 6B may be as follows: After a time for displaying the prompt information 601 on the interface shown in FIG. 6B reaches 10s, the electronic device can display the interface shown in FIG. 5C. After receiving a trigger operation on the icon 303 of the satellite communication application, the electronic device can display the interface shown in FIG. 3B. Then, the electronic device can complete the satellite connection process with reference to the steps related to the interface shown in FIG. 3C to the interface shown in FIG. 3F, and display the interface shown in FIG. 6C.

It may be understood that, before using satellite communication, the user may not pay attention to the remaining battery level. After the electronic device automatically switches to the ultra power saving mode, the user learns that a current battery level is low. To save power, the user may not want to use satellite communication. In this case, in still another possible implementation, after switching to the ultra power saving mode, based on a user selection, the electronic device can restart the satellite communication application or may not use the satellite communication application, thereby improving use experience of the user.

To improve accuracy of automatically switching to the ultra power saving mode during enabling of satellite communication, after starting the satellite communication application and receiving the trigger operation on the enable satellite control 305, the electronic device can determine a value relationship between the remaining battery level and the first battery level threshold. During actual application, the electronic device recognizes an operation indicating the user intent of using satellite communication may alternatively be a user operation of tapping the icon of the satellite communication application; after receiving a trigger operation on the icon of satellite communication, the electronic device determines the value relationship between the remaining battery level and the first battery level threshold, and displays the prompt information 601 when the remaining battery level is less than the first battery level threshold. For example, on the interface shown in FIG. 3A, when the remaining battery level is less than the first battery level threshold, and the electronic device receives the trigger operation on the 303 of satellite communication, the electronic device displays a pop-up window including the prompt information 601 at the bottom of the interface shown in FIG. 3A. This is not limited in this embodiment of this application.

In this way, when the battery level is low and a user wants to use satellite communication, the electronic device can automatically enter the ultra power saving mode. This prolongs the use duration of the electronic device and the duration for satellite communication, simplifies the user operation of switching to the ultra power saving mode, and improves the use experience of the user.

FIG. 7A to FIG. 7C are a diagram of another interface of satellite communication in an ultra power saving mode according to an embodiment of this application. As shown in FIG. 7A to FIG. 7C:
In some other scenarios, in a process of using the satellite, the electronic device continuously consumes power. When the remaining battery level is less than or equal to the first battery level threshold, the electronic device can also automatically enter the ultra power saving mode. The first battery level threshold is, for example, 5%.

After the electronic device accesses the satellite, an interface shown in FIG. 7A may be displayed. The interface can display the pop-up window 401, the icon 321 of the phone application, the icon 322 of the messaging application, and a status bar. The pop-up window 401 may indicate that the electronic device has accessed the satellite. The status bar displays battery level information, for example, the remaining battery level is 6%, shown as a battery level in a dashed line circle.

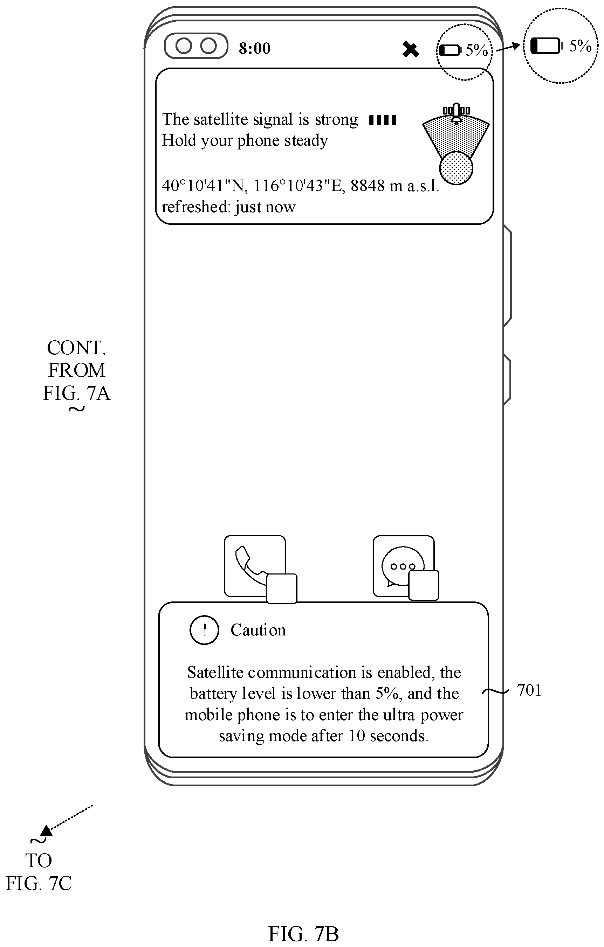

In a process of accessing the satellite, the remaining battery level of the electronic device continuously drops until the remaining battery level is equal to the first battery level threshold. For example, battery level information in the status bar of the electronic device is 5%, shown as a battery level in a dashed line circle in interface FIG. 7B.

Because the remaining battery level is less than or equal to the first battery level threshold, the electronic device displays prompt information 701 on the interface shown in FIG. 7B. The prompt information 701 is used to notify the user that the electronic device is to automatically enter the ultra power saving mode. The prompt information 701 may be the same as the prompt information 601, for example, "Satellite communication is enabled, the battery level is lower than 5%, and the mobile phone is to enter the ultra power saving mode after 10 seconds". A text of the prompt information 701 may alternatively be different from a text of the prompt information 601. The prompt information 701 may be displayed at the bottom of the screen in a form of a pop-up window, or the prompt information 701 may be displayed at another location in another form.

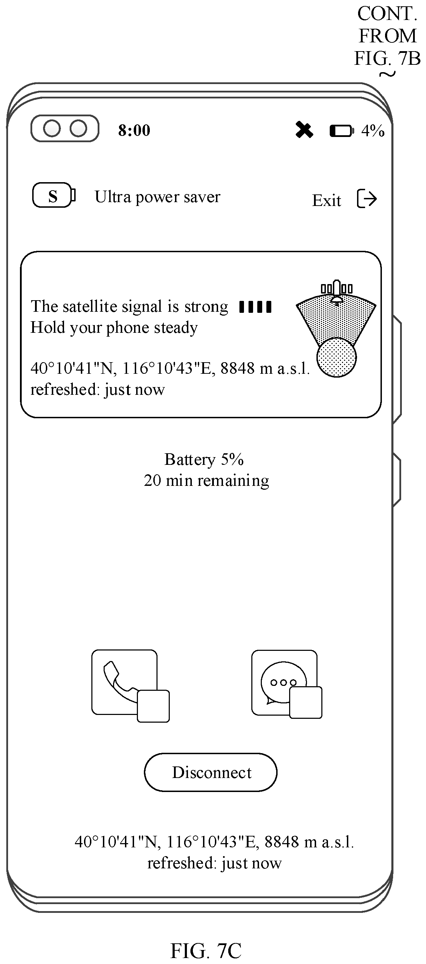

After entering the ultra power saving mode, the electronic device can display an interface shown in FIG. 7C.

In a possible implementation, a process in which the electronic device displays an interface shown in FIG. 7C from the interface shown in FIG. 7B may be as follows: After a time for displaying the prompt information 701 on the interface shown in FIG. 7B reaches 10s, the electronic device can enter the ultra power saving mode, maintain satellite communication, and display the interface shown in FIG. 7C. In this way, in a process of using satellite communication, when the battery level is low, the electronic device can automatically switch to the ultra power saving mode, and the electronic device does not need to re-access the satellite. This prolongs duration for satellite communication, simplifies a user operation, and improves use experience of the user.

In another possible implementation, a process in which the electronic device displays an interface shown in FIG. 7C from the interface shown in FIG. 7B may be as follows: After a time for displaying the prompt information 701 on the interface shown in FIG. 7B reaches 10s, the electronic device switches to the ultra power saving mode. In a process of switching to the ultra power saving mode, the electronic device closes the satellite communication application. After completing switching to the ultra power saving mode, the electronic device can display the interface shown in FIG. 5C. After receiving the trigger operation on the icon 303 of the satellite communication application, the electronic device can display the interface shown in FIG. 3B. Then, the electronic device can complete the satellite connection process with reference to the steps related to the interface shown in FIG. 3C to the interface shown in FIG. 3F, and display the interface shown in FIG. 7C. In this case, after switching to the ultra power saving mode, based on a user selection, the electronic device can restart the satellite communication application or may not use the satellite communication application, thereby improving the use experience of the user.

It may be understood that after the electronic device accesses the satellite and switches to the ultra power saving mode, the electronic device can start the satellite communication application based on a user operation or start the satellite communication application automatically. The posture of holding the electronic device by the user may not change before and after switching to the ultra power saving mode. The electronic device can quickly complete the process of searching for the satellite, aligning with the satellite, and connecting to the satellite without a position change. The user is provided with an option of continuing using satellite communication. In addition, a related user operation of controlling the electronic device to re-access the satellite in the ultra power saving mode can be simplified.

In this embodiment of this application, the remaining battery level of the electronic device can alternatively reach the first battery level threshold in a satellite communication process. For example, when the user is making a call and/or receiving and sending messages, the battery level of the electronic device is less than or equal to 5%. In this case, the electronic device automatically switches to the ultra power saving mode without affecting a call process and/or a process of receiving and sending messages. The user can hold a call and/or compose a message. In this way, with power saving implemented, an ongoing call service and an ongoing messaging service are not affected, thereby improving the use experience of the user.

The foregoing embodiment describes a scenario of using satellite communication when the remaining battery level is lower than the first battery level threshold. It may be understood that the remaining battery duration is related to power consumption of a running application, and current weather. For example, in a low-temperature scenario, internal resistance of a battery in an electronic device increases, and a voltage drops rapidly. As a result, power consumption of the electronic device in the low-temperature scenario is greater than power consumption in a roomtemperature scenario. In consideration of impact of a temperature on the battery level, a mapping relationship between a temperature range and a battery level threshold may be further set in this embodiment of this application. For example, a first temperature range corresponds to the first battery level threshold, a second temperature range corresponds to a second battery level threshold, and a third temperature range corresponds to a third battery level threshold...

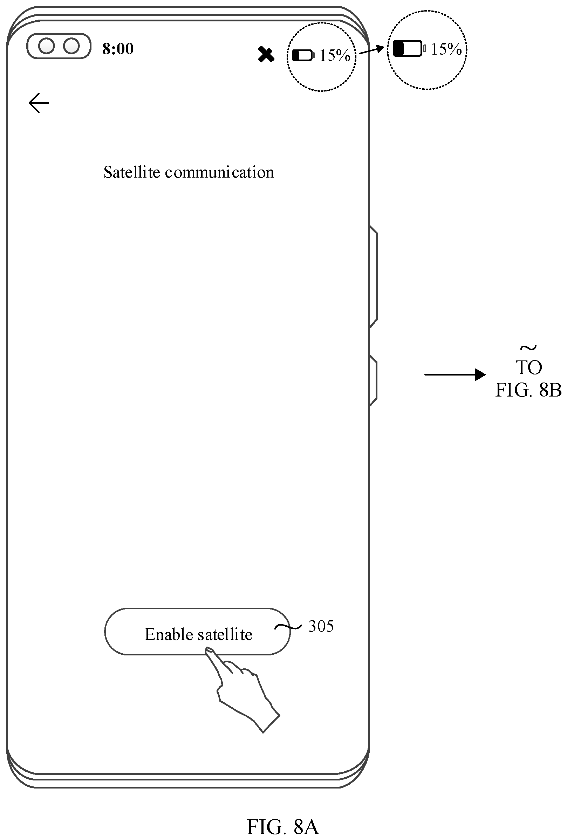

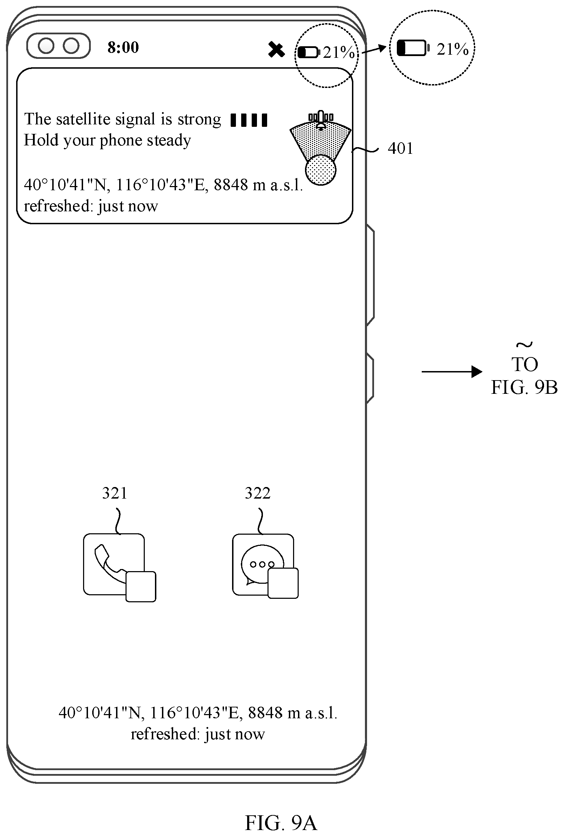

The following uses an example in which the first temperature range and the second temperature range are set for the electronic device, to describe, with reference to FIG. 8A to FIG. 8C and FIG. 9A to FIG. 9C, a process in which the electronic device automatically switches to the ultra power saving mode and performs satellite communication under the preset condition.

A boundary value between the first temperature range and the second temperature range is a preset temperature, and the preset temperature may be, for example, -20°C. When a current temperature is higher than the preset temperature, the current temperature is within the first temperature range, and a battery level threshold corresponds to the first battery level threshold. For example, when the temperature is greater than -20°C, the electronic device switches to the ultra power saving mode when the battery level is 5%. When a current temperature is less than or equal to the preset temperature, the current temperature is within the second temperature range, a battery level threshold corresponds to the second battery level threshold, and the second battery level threshold is, for example, 20%. For example, when the temperature is lower than -20°C, the electronic device switches to the ultra power saving mode when the battery level is 20%.

It may be understood that, in this embodiment of this application, the temperature may be negatively correlated to the battery level threshold. A temperature value within the first temperature range is greater than a temperature value within the second temperature range, and the first battery level threshold is less than the second battery level threshold.

Specifically, FIG. 8A to FIG. 8C are a diagram of interfaces of satellite communication in an ultra power saving mode according to an embodiment of this application. As shown in FIG. 8A to FIG. 8C:

In some scenarios, the remaining battery level of the electronic device is low, and the user needs to use the satellite for communication. When a temperature is less than or equal to the preset temperature, and the remaining battery level is less than or equal to the second battery level threshold, the electronic device can automatically enter the ultra power saving mode. The preset temperature is, for example, -20°C, and the second battery level threshold is, for example, 20%.

In some embodiments, a current temperature is, for example, -25°C, and after receiving a tap on the icon of the satellite communication application by the user, the electronic device can display an interface shown in FIG. 8A. On the interface shown in FIG. 8A, the electronic device displays the enable satellite control 305 and a status bar. The status bar displays battery level information, for example, the remaining battery level is 15%, shown as a battery level in a dashed line circle.

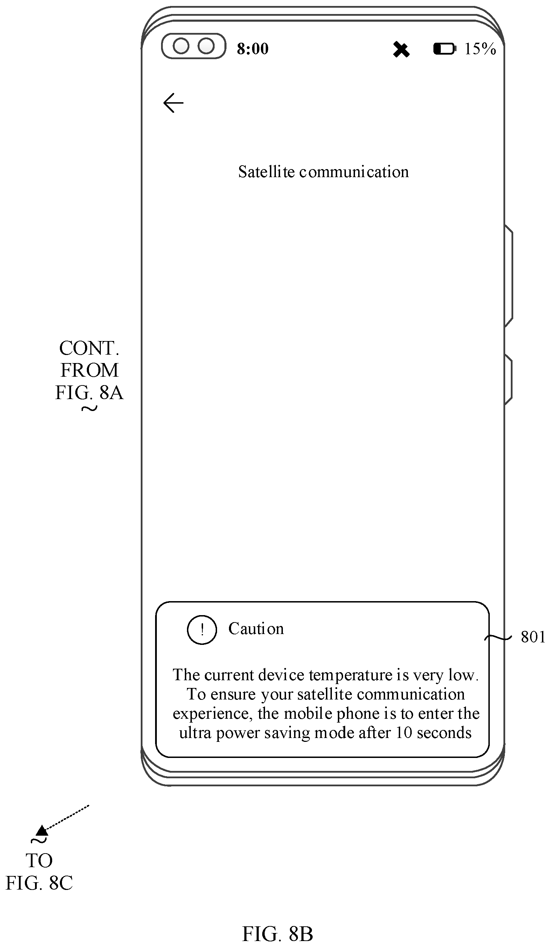

On the interface shown in FIG. 8A, when receiving a trigger operation on the enable satellite control 305, the electronic device can display an interface shown in FIG. 8B. The interface shown in FIG. 8B can display prompt information 801. The prompt information 801 is used to notify the user that the electronic device is to automatically enter the ultra power saving mode. The prompt information 801 may be, for example, "The current device temperature is very low. To ensure your satellite communication experience, the mobile phone is to enter the ultra power saving mode after 10 seconds". The prompt information 801 may be displayed at the bottom of the screen in a form of a pop-up window, or the prompt information 801 may be displayed at another location in another form.

It may be understood that, when the interface shown in FIG. 8B is displayed, the remaining battery level (15%) of the electronic device is less than the second battery level threshold (5%), and a temperature (-25°C) at which the electronic device is located is less than the preset temperature (-20°C). Therefore, after the electronic device identifies an intention of the user to use satellite communication (for example, the user taps the enable satellite control 305 or taps the icon of the satellite communication application), the electronic device automatically enters the ultra power saving mode.

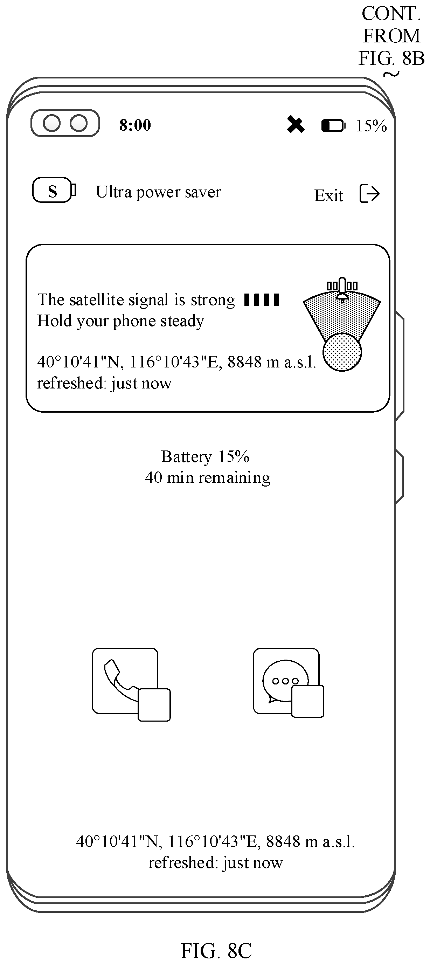

After entering the ultra power saving mode, the electronic device may perform a step of accessing the satellite. For a process in which the electronic device displays an interface shown in FIG. 8C from the interface shown in FIG. 8B, refer to the related descriptions in the plurality of possible implementations in FIG. 6A to FIG. 6C. Details are not described herein again.

It may be understood that, when the current temperature is greater than the preset temperature, the electronic device can switch to the ultra power saving mode when the remaining battery level is less than or equal to the first battery level threshold. For this process, refer to the related descriptions in embodiments shown in FIG. 6A to FIG. 6C and FIG. 7A to FIG. 7C. This scenario is not described herein again.

In addition, in this embodiment of this application, only two temperature ranges are used as an example to describe a scenario of automatically entering the ultra power saving mode. During actual application, a plurality of temperature ranges may be set for the electronic device. Any temperature range corresponds to a different battery level threshold. When a current temperature is within the temperature range and a current battery level is less than or equal to the battery level threshold corresponding to the temperature range, the electronic device can switch to the ultra power saving mode. Details are not described in this embodiment of this application.

In a low-temperature scenario, for example, if a temperature is lower than -20°C, power consumption of the electronic device increases. If the battery level threshold is 5%, after the electronic device switches to the ultra power saving mode, the battery level of 5% may not be sufficient to support a long call for the electronic device in a low-temperature environment. Therefore, a higher battery level threshold is set for a lower temperature, while a lower battery level threshold is set for a higher temperature.

This can prolong the duration of using satellite communication by the electronic device in the low-temperature scenario, simplify the user operation of switching to the ultra power saving mode, and improve the use experience of the user.

FIG. 9A to FIG. 9C are a diagram of another interface of satellite communication in an ultra power saving mode according to an embodiment of this application. As shown in FIG. 9A to FIG. 9C:
In some other scenarios, in a process of using the satellite, the electronic device continuously consumes power. When a temperature is less than or equal to the preset temperature, and the remaining battery level is less than or equal to the second battery level threshold, the electronic device can also automatically enter the ultra power saving mode. The preset temperature is, for example, -20°C, and the second battery level threshold is, for example, 20%.

A current temperature is, for example, -25°C, and after the electronic device accesses the satellite, an interface shown in FIG. 9A may be displayed. The interface can display the pop-up window 401, the icon 321 of the phone application, the icon 322 of the messaging application, and a status bar. The pop-up window 401 may indicate that the electronic device has accessed the satellite. The status bar displays battery level information, for example, the remaining battery level is 21%, shown as a battery level in a dashed line circle.

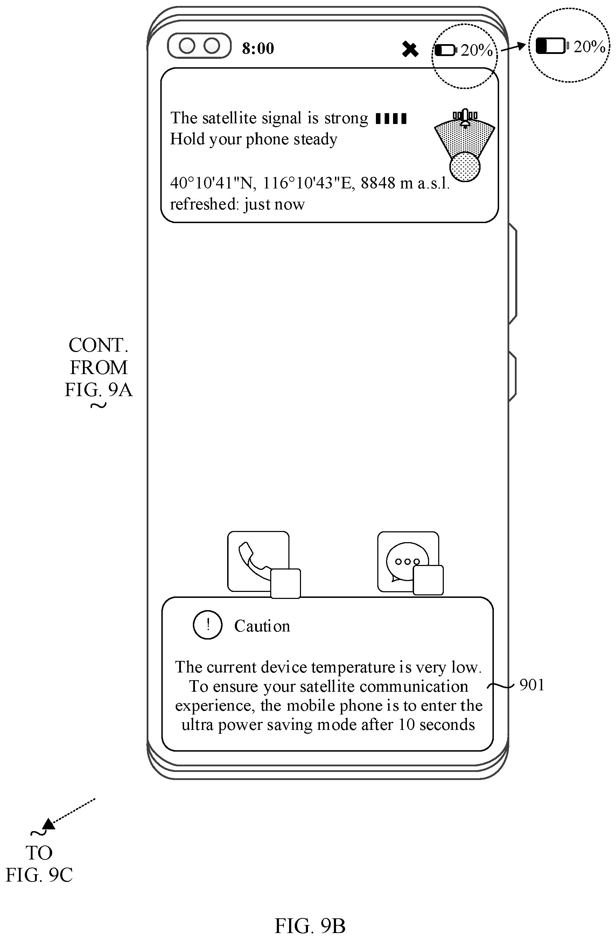

In a process of accessing the satellite, the remaining battery level of the electronic device continuously drops until the remaining battery level is equal to the second battery level threshold. For example, battery level information in the status bar of the electronic device is 20%, shown as a battery level in a dashed line circle in interface FIG. 9B.

Because the current temperature is less than the preset temperature, and the remaining battery level is less than or equal to the second battery level threshold, the electronic device displays prompt information 901 on the interface shown in FIG. 9B. The prompt information 901 is used to notify the user that the electronic device is to automatically enter the ultra power saving mode. The prompt information 901 may be the same as the prompt information 801, for example, "The current device temperature is very low. To ensure your satellite communication experience, the mobile phone is to enter the ultra power saving mode after 10 seconds". A text of the prompt information 901 may alternatively be different from a text of the prompt information 801. The prompt information 901 may be displayed at the bottom of the screen in a form of a pop-up window, or the prompt information 901 may be displayed at another location in another form.

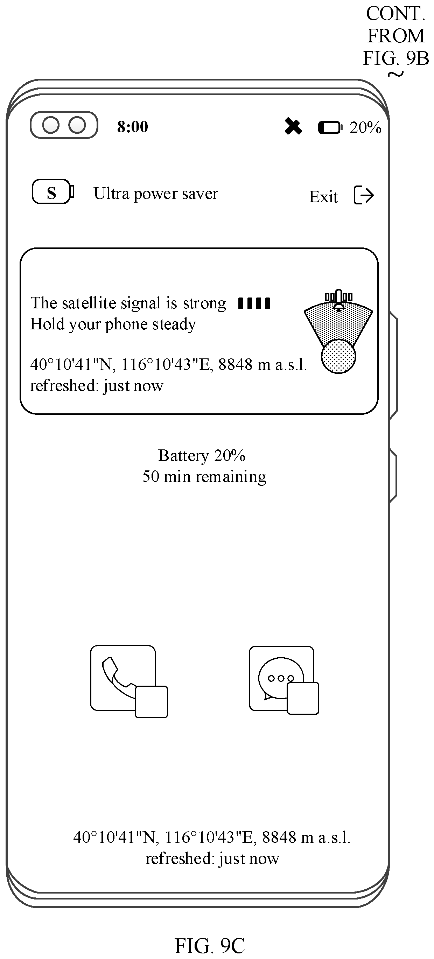

After entering the ultra power saving mode, the electronic device may perform a step of accessing the satellite. For a process in which the electronic device displays an interface shown in FIG. 9C from the interface shown in FIG. 9B, refer to the related descriptions in the plurality of possible implementations in FIG. 7A to FIG. 7C. Details are not described herein again.

This can prolong the duration of using satellite communication by the electronic device in the low-temperature scenario, simplify the user operation of switching to the ultra power saving mode, and improve the use experience of the user.

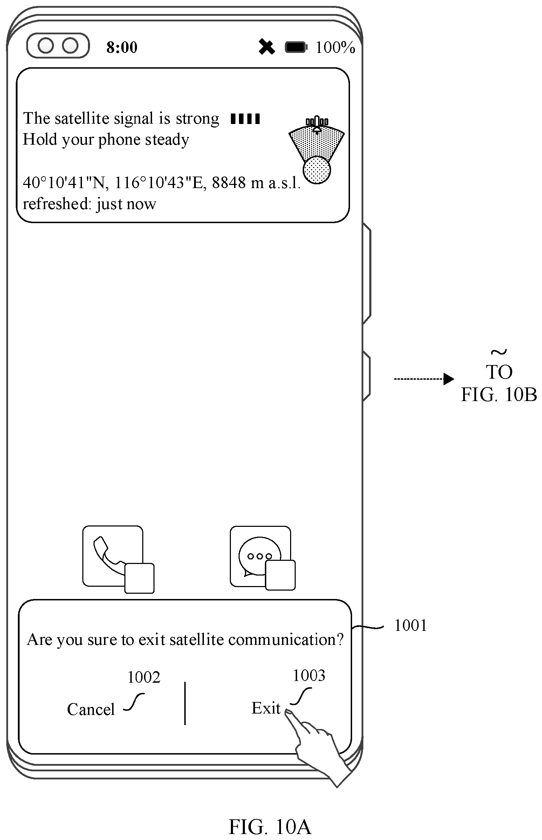

In this embodiment of this application, when a preset condition that the electronic device has used satellite communication and the electronic device does not access the ground is met, the electronic device can also automatically enter the ultra power saving mode. FIG. 10A to FIG. 10C are a diagram of interfaces of satellite communication in an ultra power saving mode according to an embodiment of this application. As shown in FIG. 10A to FIG. 10C:
The electronic device can access the satellite by using the steps related to the interface shown in FIG. 3A to the interface shown in FIG. 3F, and display the interface shown in FIG. 4. The interface shown in FIG. 4 includes the disconnect control 402. When receiving a trigger operation on the disconnect control 402, in response to the operation, the electronic device can display an interface shown in FIG. 10A.

On the interface shown in FIG. 10A, the electronic device displays a pop-up window 1001. The pop-up window 1001 includes a cancel control 1002 and an exit control 1003 (which may also be an OK control or a confirm control). The pop-up window 1001 may be used to determine whether to exit satellite communication. A prompt text in the pop-up window 1001 may be, for example, "Are you sure to exit satellite communication?". The cancel control 1002 can be used to cancel exiting satellite communication. The exit control 1003 can be used to exit satellite communication. When receiving a trigger operation on the exit control 1003, the electronic device exits satellite communication.

Alternatively, the electronic device can implement effect of exiting satellite communication based on the close control 309 in any pop-up window on the interface shown in FIG. 3C to the interface shown in FIG. 3F. The interface shown in FIG. 3C is used as an example. When the electronic device receives a trigger operation on the close control 309, the electronic device can display the interface shown in FIG. 10A. When receiving a trigger operation on the exit control 1003 on the interface shown in FIG. 10A, the electronic device exits satellite communication.

In this embodiment of this application, the interface shown in FIG. 10A may be used to reduce an accidental trigger, and reduce a probability of a communication connection interruption between the electronic device and the satellite caused by an accidental touch on the close control by the user, thereby improving user experience. Optionally, during actual application, after receiving a trigger operation on the disconnect control 402 or the close control 309, the electronic device cannot display the interface shown in FIG. 10A, and directly exits satellite communication.

Then, when the electronic device uses the satellite communication application again and does not access the ground, the electronic device can switch to the ultra power saving mode.

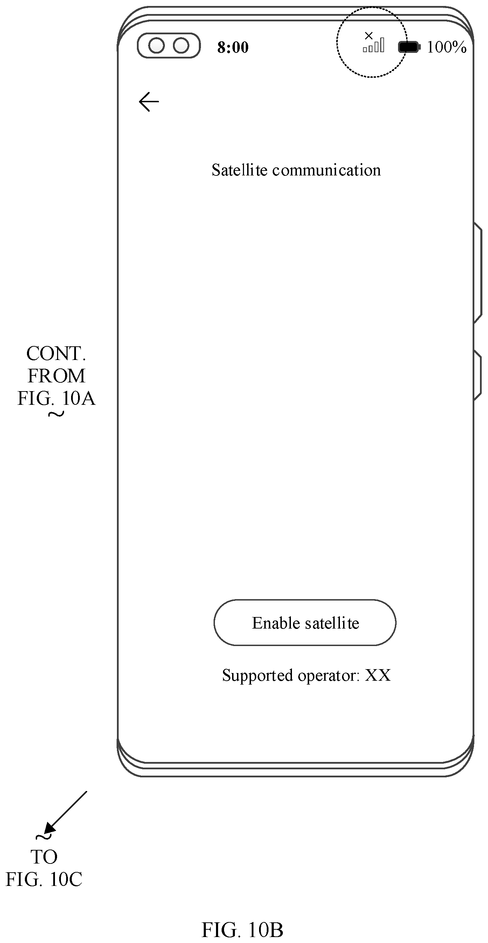

For example, after the electronic device receives a trigger operation on the icon 303 of the satellite communication application again, the electronic device can display an interface shown in FIG. 10B. The interface shown in FIG. 10B may include a status bar. Network quality information in the status bar may indicate that the device currently neither accesses a non-cellular network nor accesses the Wi-Fi network, as shown in a dashed circle.

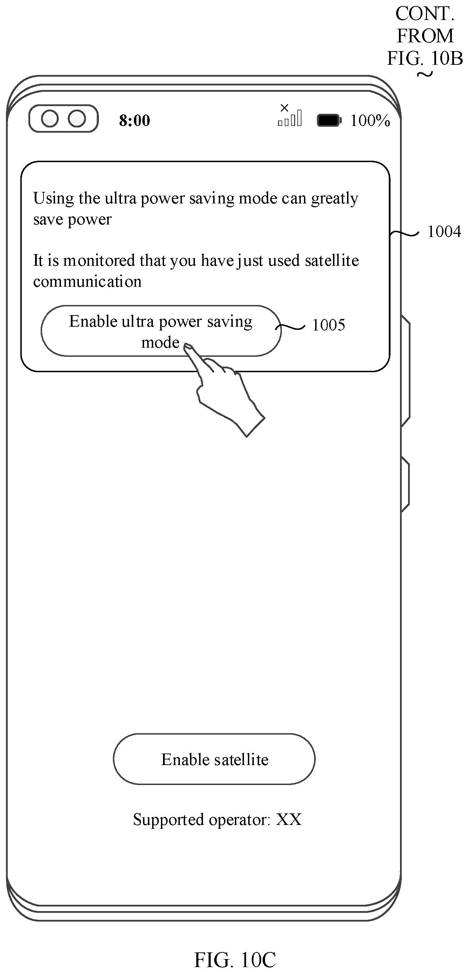

After detecting that the electronic device does not access the terrestrial network, and the electronic device has previously accessed satellite communication, the electronic device can display an interface shown in FIG. 10C. A pop-up window 1004 is displayed on the interface shown in FIG. 10C. The pop-up window 1004 is used to inform the user that the ultra power saving mode may be used to save power. A prompt text of the pop-up window 1004 may be, for example, "Using the ultra power saving mode can greatly save power. It is detected that you have just used satellite communication". The pop-up window 1004 includes an enable ultra power saving mode control. When receiving a trigger operation on the enable ultra power saving mode control 1005, the electronic device can switch to the ultra power saving mode.

In this way, in a scenario in which the electronic device may be unable to access the terrestrial network or quality of the terrestrial network is poor, the electronic device can prompt the user to save power, to prolong a satellite communication time of the electronic device and improve use experience of the user.

It should be noted that, in the ultra power saving mode, a display mode of the electronic device may be a dark mode, and desktop wallpaper (or background) shown in FIG. 5C is different from desktop wallpaper (or wallpaper) shown in FIG. 5A. A desktop color shown in FIG. 5C is darker. All interfaces in the ultra power saving mode in FIG. 5A to FIG. 10C in embodiments of this application may be interfaces in the dark mode. The dark mode is not shown in the figures in embodiments of this application. Details are not described later in embodiments of this application. In addition, in embodiments of this application, a satellite communication control method is described by using only the ultra power saving mode as an example. The electronic device may perform the control method provided in embodiments of this application in a power saving mode. This is not limited in embodiments of this application.

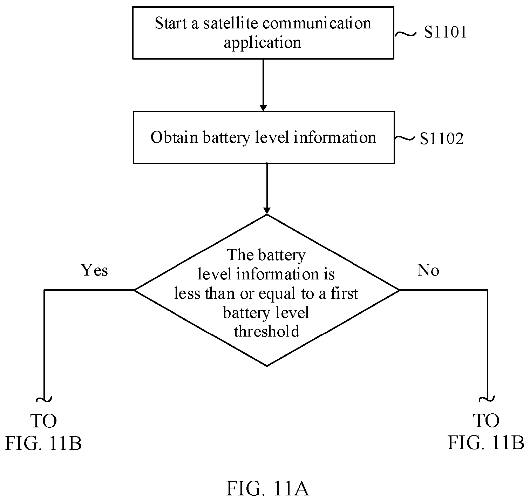

With reference to FIG. 3A FIG. 10C, the foregoing embodiments describe satellite communication scenarios in a plurality of ultra power saving modes provided in embodiments of this application. With reference to FIG. 11A to FIG. 14B, the following separately describes procedures in which the electronic device performs the control methods in embodiments of this application in the plurality of scenarios.

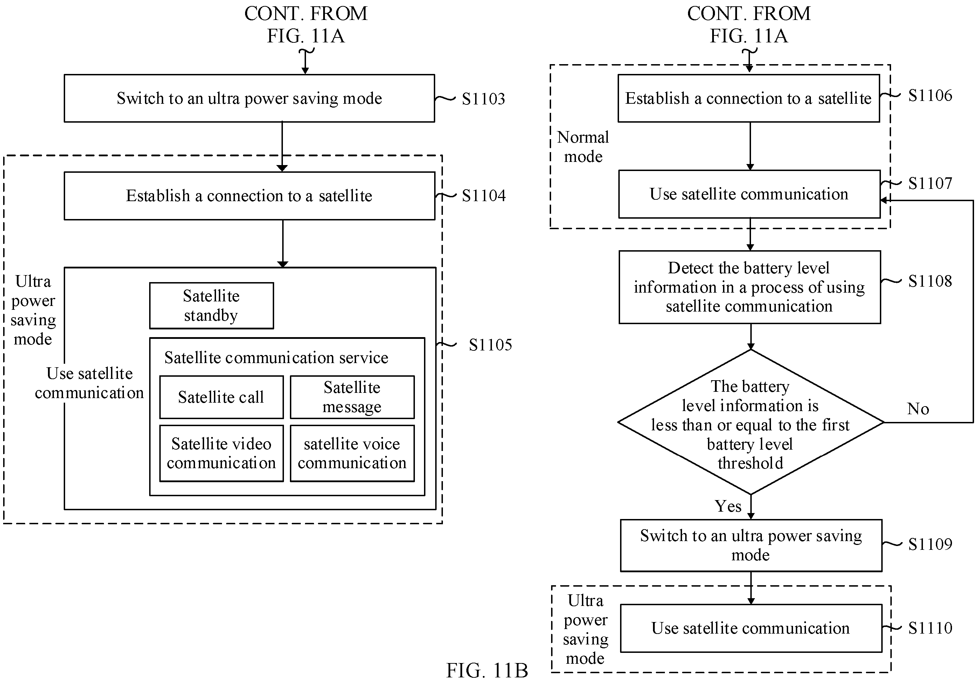

On the basis of embodiments shown in FIG. 6A to FIG. 6C and FIG. 7A to FIG. 7C, FIG. 11A and FIG. 11B are a schematic flowchart of a control method according to an embodiment of this application. As shown in FIG. 11A and FIG. 11B:
S1101: An electronic device starts a satellite communication application.

The electronic device is in a normal mode, and the normal mode may be understood as a working state of the electronic device when the electronic device does not enter an ultra power saving mode. The electronic device can display, for example, the icon 303 of the satellite communication application on the interface shown in FIG. 3A. When receiving a trigger operation on the icon 303 of the satellite communication application, the electronic device can start the satellite communication application, for example, display the interface shown in FIG. 3B.

S1102: The electronic device obtains battery level information.

The battery level information may include a battery level value (level). After starting the satellite communication application, the electronic device can monitor a battery level change. For example, the electronic device can register for a broadcast, and obtain current battery level information of the electronic device after receiving the broadcast. Alternatively, the electronic device can obtain the current battery level information of the electronic device based on a battery management module (battery manager). A manner of obtaining the battery level information is not limited in this embodiment of this application.

S1103: If the battery level information is less than or equal to a first battery level threshold, the electronic device switches to the ultra power saving mode.

The first battery level threshold may be a boundary value between a low battery state (low battery state) of a battery and a normal state of the battery. The first battery level threshold may be a fixed value, and the first battery level threshold may alternatively be a user-defined low battery level value. The first battery level threshold may be, for example, 5%.

That the electronic device switches to the ultra power saving mode may be represented as at least one of the following: The electronic device sets a display mode to a dark mode; the electronic device accesses an ultra power saving desktop; the electronic device reduces screen luminance; the electronic device closes a running process, and/or closes a power-consuming setting item, and the like.

For the ultra power saving desktop, refer to the interface shown in FIG. 5C. The screen luminance can be reduced in the following manner: reducing a frequency of pulse width modulation (pulse width modulation, PWM), reducing maximum screen luminance, reducing a frame rate for all scenarios, and the like. Closing the power-consuming setting item may be: The ultra power saving desktop may not include a setting application, and a control center interface maintains a communication-related shortcut control, for example, a mobile data control, a wireless local area network (wireless local area network, WLAN) control, a Bluetooth control, and a position information control. The mobile data control may be used to enable or disable a connection to a cellular network. The WLAN control may be used to enable or disable a connection to a Wi-Fi network. The Bluetooth control may be used to enable or disable a Bluetooth function. The position information control may be used to enable or disable positioning.

This embodiment of this application describes only an example of a terminal form in the ultra power saving mode. The electronic device can further display more or fewer functions in the ultra power saving mode. This is not limited in this embodiment of this application.

Optionally, before switching to the ultra power saving mode, the electronic device further displays first prompt information. The first prompt information may be, for example, the prompt information 601 on the interface shown in FIG. 6B. The first prompt information may be used to notify a user that the electronic device is to automatically enter the ultra power saving mode. Optionally, the electronic device can directly switch to the ultra power saving mode without displaying the first prompt information.

S1104: The electronic device establishes a connection to a satellite in the ultra power saving mode.

A process in which the electronic device establishes the connection to the satellite may include: The electronic device searches for the satellite; after finding the satellite, the electronic device aligns with the satellite; after aligning with the satellite, the electronic device requests to access the satellite; the electronic device determines whether to enable a satellite communication service; when the electronic device enables the satellite communication service, the electronic device accesses the satellite.

In a satellite search process, the electronic device can obtain position information of the satellite, and display, for example, the interface shown in FIG. 3C. In a satellite alignment process, the electronic device can display the interface shown in FIG. 3D, and use prompt information 313 to prompt the user to adjust a posture of holding the device, and further adjust an azimuth angle, an elevation angle, and a polarization angle of an antenna of the electronic device, so that a center of a transmit beam of the antenna is aligned with the satellite. After satellite alignment ends, the electronic device may attempt to establish a communication connection with the satellite. In the connection process, the electronic device can display, for example, the interface shown in FIG. 3E. Optionally, in the connection process, the electronic device can detect whether the satellite communication service is enabled. The satellite communication service is related to an operator that manages the satellite. After enabling a corresponding satellite communication service, the electronic device can use a satellite for communication. After accessing the satellite, the electronic device can display the interface shown in FIG. 3F.

In this embodiment of this application, operations such as satellite alignment timeout, connection timeout, not enabling the satellite communication service, tapping the close control 309, and satellite connection loss timeout may result in a satellite connection failure. In these cases, the electronic device may not perform subsequent steps.

It should be noted that, for an interface displayed when the electronic device establishes the connection to the satellite in the ultra power saving mode, refer to the interface shown in FIG. 3C to the interface shown in FIG. 3F. Content displayed on a plurality of interfaces in the ultra power saving mode may be the same as content displayed on the interfaces shown in FIG. 3A to FIG. 3F in the normal mode. However, in the ultra power saving mode, the electronic device may be in the dark mode, the screen luminance is lower, and luminance of a shown interface is darker. In the normal mode, the screen luminance is higher, and luminance of a shown interface is brighter. The interfaces related to FIG. 3A to FIG. 3F do not show a difference in screen luminance between the two modes. Details are described herein in this embodiment of this application.

S1105: The electronic device uses satellite communication in the ultra power saving mode. The using satellite communication includes: The electronic device maintains a connection to the satellite network, and/or the electronic device uses the satellite network to perform a satellite communication service.

After the electronic device accesses the satellite network, the user may use the electronic device to perform a satellite communication service with another electronic device or a rescue platform. The satellite communication service may include the following services: a satellite call based on the satellite network, reception and transmission of a satellite message, satellite video communication, satellite voice communication, or the like. After the electronic device accesses the satellite network, when the user does not use the satellite communication service, the electronic device may be in a satellite standby state. In the satellite standby state, the electronic device can maintain the connection to the satellite network.

For example, that the electronic device performs the satellite communication service may be that, for example, the electronic device can display, for example, the interface shown in FIG. 6C, where the interface further includes an icon 321 of a phone application, an icon 322 of a messages application, and the like; after receiving a trigger operation on the icon 321 of the phone application, the electronic device can use the satellite network to initiate a call to another electronic device; and after receiving a trigger operation on the icon 322 of the messages application, the electronic device can use the satellite network to send a message to another electronic device. These are not described one by one.

It may be understood that steps S1101 to S1105 may correspond to the related descriptions in the embodiment shown in FIG. 6A to FIG. 6C.

Optionally, after step S1103, the electronic device may perform steps S1104 and S1105. The electronic device can continue performing subsequent steps of starting the satellite communication application after switching to the ultra power saving mode. This process may correspond to a scenario shown in one possible implementation and/or another possible implementation in the embodiment shown in FIG. 6A to FIG. 6C.

Optionally, after step S1103, the electronic device may perform steps S1101, S1104, and S1105. When switching to the ultra power saving mode, the electronic device can close a related process of the satellite communication application. After switching to the ultra power saving mode, the electronic device can restart the satellite communication application and access the satellite network. This process may correspond to a scenario shown in still another possible implementation in the embodiment shown in FIG. 6A to FIG. 6C.

Alternatively, after step S1102, the method further includes the following steps:

S1106: If the battery level information is greater than the first battery level threshold, the electronic device establishes a connection to the satellite in the normal mode.

For a process in which the electronic device establishes the connection to the satellite in step S1106, refer to the related descriptions in step S1104. For step S1106, refer to the interface shown in FIG. 3C to the interface shown in FIG. 3F.

It may be understood that screen luminance of the electronic device in the normal mode is higher than screen luminance of the electronic device in the ultra power saving mode, and luminance of an interface displayed when the electronic device performs step S1106 may be higher than luminance of the interface displayed when the electronic device performs step S1104.

S1107: The electronic device uses satellite communication in a normal mode.

For a process in which the electronic device uses satellite communication in step S1107, refer to the related descriptions in step S1105. For step S1106, refer to the interface shown in FIG. 3F to the interface shown in FIG. 4. Luminance of an interface displayed when the electronic device performs step S1107 may be higher than luminance of an interface displayed when the electronic device performs step S1105.

It may be understood that, in the normal mode, the electronic device can enter a standby mode after accessing the satellite network, or use the satellite network to perform a service such as a satellite call, a satellite message, satellite video communication, and satellite voice communication (not shown in FIG. 11A and FIG. 11B).

S1108: The electronic device detects the battery level information in a process of using satellite communication.

For a process in which the electronic device detects the battery level information, refer to the related descriptions in step S1102.

S1109: If the battery level information is less than or equal to a first battery level threshold, the electronic device switches to the ultra power saving mode.

For a process of switching to the ultra power saving mode, refer to the related descriptions in step S1103.

Alternatively, if the battery level information is greater than the first battery level threshold, the electronic device continues performing step S1107.

S1110: The electronic device uses satellite communication in the ultra power saving mode.

For a process in which the electronic device uses satellite communication in the ultra power saving mode, refer to the related descriptions in step S1105. The using satellite communication in step S1110 may further include satellite standby and a satellite communication service. The satellite communication service includes a satellite call, a satellite message, satellite video communication, and satellite voice communication (not shown in FIG. 11A and FIG. 11B). Similar steps are not described repeatedly in subsequent steps. It may be understood that steps S1101 and S1102, and S1106 to S1110 may correspond to the related descriptions in the embodiment shown in FIG. 7A to FIG. 7C.

Optionally, after step S1109, the electronic device may perform step S1110. After the electronic device accesses the satellite network and switches to the ultra power saving mode, the electronic device can continue using the satellite network for communication. This process may correspond to a scenario shown in a possible implementation in the embodiment shown in FIG. 7A to FIG. 7C.

Optionally, after step S1109, the electronic device may perform step S1101 and a subsequent satellite connection process again. When switching to the ultra power saving mode, the electronic device can close a related process of the satellite communication application; after switching to the ultra power saving mode, the electronic device can restart the satellite communication application based on a user operation or start the satellite communication application automatically, and access the satellite network. This process may correspond to a scenario shown in another possible implementation in the embodiment shown in FIG. 7A to FIG. 7C.

It should be noted that the electronic device may periodically monitor battery level information of the battery. This embodiment of this application shows two time scenarios of automatically switching to the ultra power saving mode. One scenario is that the ultra power saving mode is enabled in a low-power scenario, so that the electronic device can switch to the ultra power saving mode. The other scenario is that power consumption continues during use of the ultra power saving mode until a battery level reaches or is below the first battery level threshold, so that the electronic device can switch to the ultra power saving mode. In an actual scenario, in a process in which the electronic device accesses the satellite network (for example, the interface shown in FIG. 3B to the interface shown in FIG. 3E), a scenario in which the battery level reaches the first preset threshold may also occur; when detecting that the battery level information reaches the first battery level threshold, the electronic device can switch to the ultra power saving mode; alternatively, after successfully accessing the satellite network, the electronic device can switch to the ultra power saving mode. This is not limited in this embodiment of this application.

In this way, when the battery level is low and a user wants to use satellite communication, the electronic device can automatically enter the ultra power saving mode. This prolongs the use duration of the electronic device and the duration for satellite communication, simplifies the user operation of switching to the ultra power saving mode, and improves the use experience of the user.

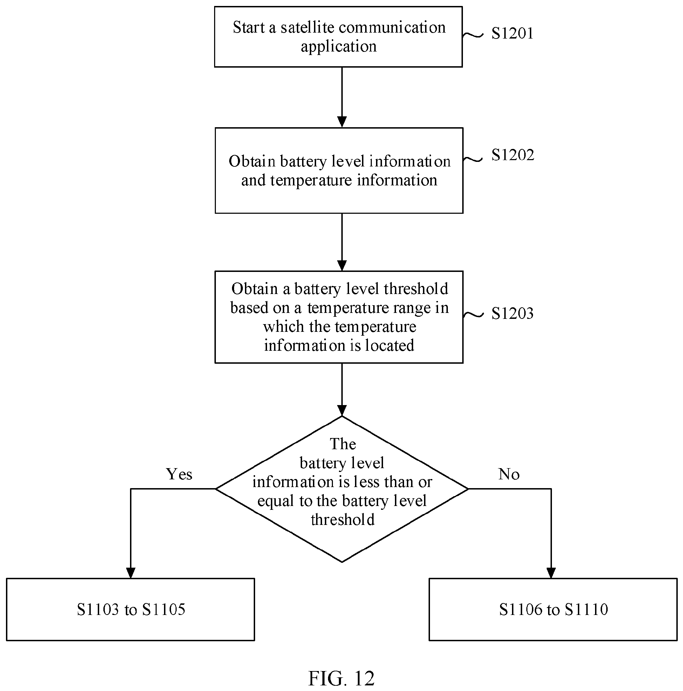

On the basis of embodiments shown in FIG. 8A to FIG. 8C and FIG. 9A to FIG. 9C, FIG. 12 is a schematic flowchart of a control method according to an embodiment of this application. As shown in FIG. 12:
S1201: An electronic device starts a satellite communication application.

For this step, refer to the related descriptions in step S1101. Details are not described herein again.

S1202: The electronic device obtains battery level information and temperature information.

The electronic device includes a temperature sensor and a temperature control management module. The temperature sensor may detect a temperature of an environment in which the electronic device is located in real time, and return temperature data to the temperature control management module. The electronic device obtains current temperature information based on a temperature and air management module. A unit of the temperature information may be degrees Celsius. Optionally, the electronic device can alternatively obtain the temperature information based on a weather application. For example, the electronic device can call a weather interface to obtain the current temperature information in real time. A temperature in this embodiment of this application may be temperature information of the electronic device, or may be temperature information of the environment in which the electronic device is located. A method for obtaining the temperature information and a meaning of the temperature are not limited in this application.

For a process in which the electronic device obtains the battery level information, refer to the related descriptions in step S1102. Details are not described herein again.

S1203: The electronic device obtains, based on a temperature range in which the temperature information is located, a battery level threshold corresponding to the temperature range.

A mapping relationship between a temperature range and a battery level threshold may be set for the electronic device. The mapping relationship may include a plurality of temperature ranges. Any temperature range corresponds to one battery level threshold. For example, the temperature range may include a first temperature range, a second temperature range, and a third temperature range..., and corresponding battery level thresholds may be a first battery level threshold, a second battery level threshold, or a third battery level threshold...

The electronic device can find a corresponding battery level threshold based on a temperature range in which the current temperature information is located. In this embodiment of this application, a quantity of temperature ranges is not limited, and a maximum temperature value and a minimum temperature value of any temperature range are not limited.

S1204: If the battery level information is less than or equal to the battery level threshold, the electronic device may perform steps S1103 to S1105.

It may be understood that the electronic device can adjust, based on a temperature, a battery level threshold used to trigger switching to the ultra power saving mode. If a current battery level is less than or equal to the battery level threshold, it indicates that remaining battery duration is short at a current temperature, and the electronic device can switch to the ultra power saving mode to save power and prolong a use time or a standby time.

If the battery level information is less than or equal to the battery level threshold, the electronic device may perform the following steps: switching to the ultra power saving mode, connecting to the satellite in the ultra power saving mode, and using satellite communication in the ultra power saving mode. For this process, refer to the related descriptions in steps S1103 to S1105. Details are not described herein again.

Alternatively, in S1205, if the battery level information is greater than the battery level threshold, the electronic device may perform steps S1106 to S1110.

It may be understood that the electronic device can adjust, based on a temperature, a battery level threshold used to trigger switching to the ultra power saving mode. If the current battery level is greater than the battery level threshold, it indicates that the remaining battery level supports long-time satellite communication or standby at the current temperature, and the electronic device does not need to save power.

If the battery level information is greater than the battery level threshold, the electronic device may perform the following step: connecting to the satellite in the normal mode, and using satellite communication in the normal mode. For this process, refer to the related descriptions in steps S1106 and S1107. Details are not described herein again.

When a user uses satellite communication in the normal mode in a current temperature environment, the electronic device consumes power continuously. In this process, the remaining battery level may drop to the battery level threshold. In this case, the electronic device can switch to the ultra power saving mode, for example, as described in steps S1108 to S1110. Details are not described herein again.

Optionally, in a process in which the user uses satellite communication in the normal mode, the temperature may change. After step S1108, the method may further include: The electronic device obtains temperature information; if a temperature range in which the temperature information is located changes, the electronic device may update a battery level threshold, and determine, based on a new battery level threshold, whether to switch to the ultra power saving mode.

In this way, the battery level threshold can be adjusted based on the current temperature. This improves accuracy of the battery level threshold, increases use duration or standby duration of satellite communication, simplifies a user operation of switching to the ultra power saving mode, improving use experience of the user.

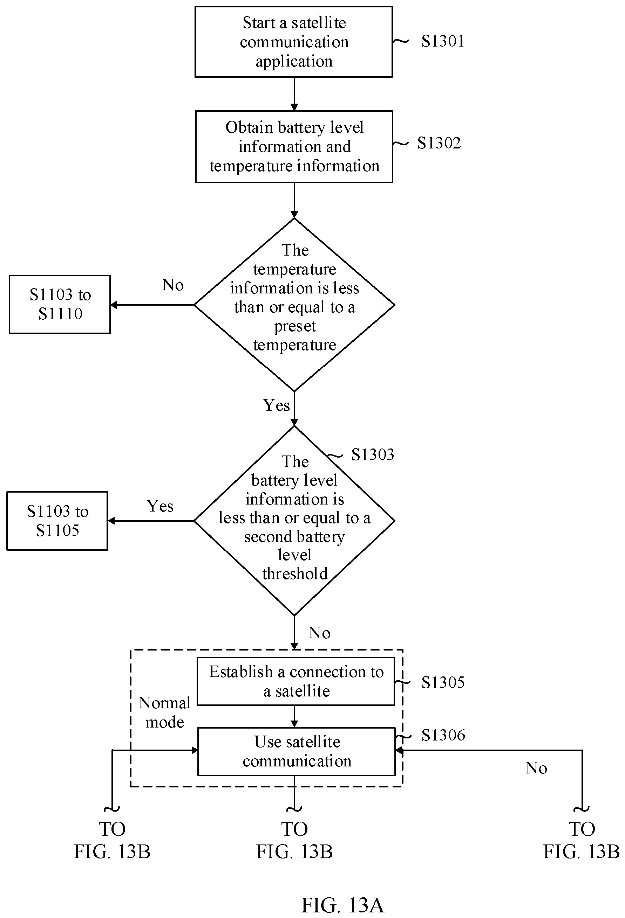

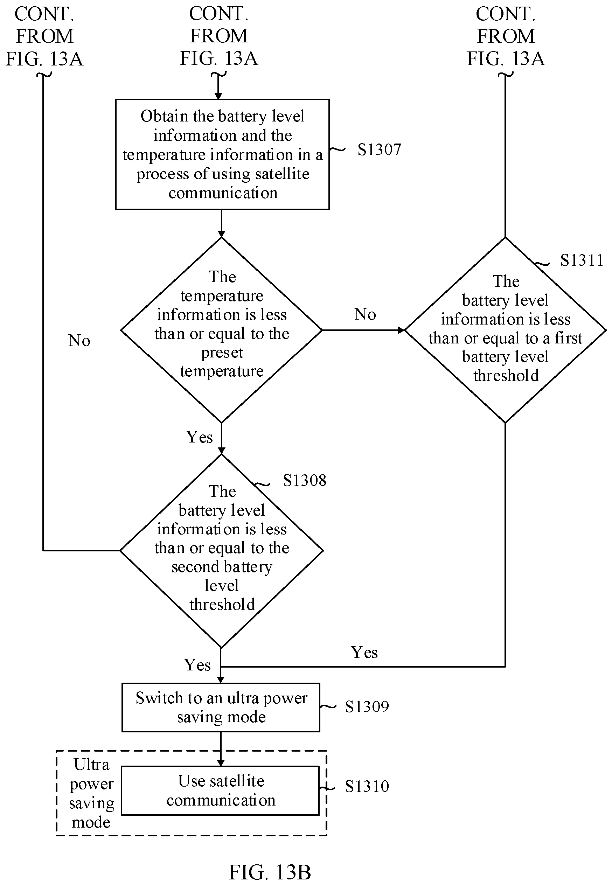

Based on the embodiment shown in FIG. 12, an embodiment of this application uses an example in which the first temperature range is the current temperature being greater than a preset temperature, the second temperature range is the current temperature being less than or equal to the preset temperature, the first temperature range corresponds to the first battery level threshold, and the second temperature range corresponds to the second battery level threshold. FIG. 13A and FIG. 13B are a schematic flowchart of a control method according to an embodiment of this application. As shown in FIG. 13A and FIG. 13B:
S1301: An electronic device starts a satellite communication application.

S1302: The electronic device obtains battery level information and temperature information.

For steps S1301 and S1302, refer to the related descriptions in steps S1201 and S1202. Details are not described herein again.

S1303: If the temperature information is less than or equal to a preset temperature, the electronic device determines whether the battery level information is less than or equal to a second battery level threshold.

When the temperature information is greater than the preset temperature, a battery level threshold may be a first battery level threshold. When the temperature information is less than or equal to the preset temperature, the battery level threshold may be the second battery level threshold. The preset temperature may be, for example, -20°C. When the temperature information is greater than -20°C, the first battery level threshold may be, for example, 5%. When the temperature information is less than or equal to -20°C, the second battery level threshold may be, for example, 20%.

S1304: If the battery level information is less than or equal to the second battery level threshold, the electronic device may perform steps S1103 to S1105.

It may be understood that, when the electronic device starts a satellite communication application and does not access a satellite network, a temperature is lower than -20°C, and a battery level is lower than 20%; in this case, after switching to an ultra power saving mode, the electronic device can access the satellite network in the ultra power saving mode, and use the satellite network for communication. For this process, refer to the related descriptions in steps S1103 to S1105. Details are not described herein again.

Alternatively, after step S1303, the method further includes the following steps:

S1305: If the battery level information is greater than the second battery level threshold, the electronic device establishes a connection to a satellite in a normal mode.

S1306: The electronic device uses satellite communication in a normal mode.

When a remaining battery level is high (for example, the battery level information is greater than 20%), the electronic device may not use the ultra power saving mode, but continues using the normal mode, and accesses the satellite network and uses the satellite network in the normal mode. For this process, refer to the related descriptions in steps S1106 and S1107. Details are not described herein again.

S1307: The electronic device obtains the battery level information and the temperature information in a process of using satellite communication.

When a user uses satellite communication in the normal mode, the electronic device may consume power continuously, and the electronic device may monitor the battery level information and the temperature information in real time. For obtaining the battery level information and the temperature information, refer to the related descriptions in step S1202. Details are not described herein again.

S1308: If the temperature information is less than or equal to the preset temperature, the electronic device determines whether the battery level information is less than or equal to a second battery level threshold.

In some embodiments, the electronic device may always be in a cold scenario, the temperature information may be less than or equal to the preset temperature, and the electronic device still uses the second battery level threshold as a battery level threshold for determining whether to trigger switching to the ultra power saving mode.

S1309: If the battery level information is less than or equal to the second battery level threshold, the electronic device switches to the ultra power saving mode.

S1310: The electronic device uses satellite communication in the ultra power saving mode.

If successfully accessing the satellite network, the electronic device switches to the ultra power saving mode. After switching, the electronic device can continue using the satellite network in the ultra power saving mode. For steps S1309 and S1310, refer to the related descriptions in steps S1109 and S1110. Details are not described herein again.

In this way, the electronic device may use the satellite network in the ultra power saving mode, thereby prolonging a use time of the electronic device and improving use experience of the user.

Optionally, after step S1302, the method further includes: If the temperature information is greater than the preset temperature, the electronic device performs steps S1103 to S1110.

In some embodiments, the electronic device may not always be in a cold scenario, the temperature information may be greater than the preset temperature, and the electronic device uses the first battery level threshold as the battery level threshold for determining whether to trigger switching to the ultra power saving mode. For a process of switching to the ultra power saving mode based on the first battery level threshold, refer to the related descriptions in steps S1103 to S1110. Details are not described herein again.

Optionally, after step S1307, the method further includes:
S1311: If the temperature information is greater than the preset temperature, the electronic device determines whether the battery level information is less than or equal to the first battery level threshold.

If the battery level information is less than or equal to the first battery level threshold, the electronic device performs step S1309 to switch to the ultra power saving mode. If the battery level information is greater than the first battery level threshold, the electronic device performs step S1306 to continue using satellite communication in the normal mode.

Optionally, after step S1303, the method further includes: If the battery level information is less than or equal to the second battery level threshold, the electronic device performs steps S1103 to S1105.

In some embodiments, the electronic device may be in a cold and low-power scenario, the temperature information may be less than or equal to the preset temperature, and the battery level information is less than the second battery level threshold. For example, the temperature information is less than or equal to -20°C, and the battery level information is less than or equal to 20%. In this case, the electronic device can switch from the normal mode to the ultra power saving mode, and complete, in the ultra power saving mode, a subsequent process of establishing a connection to a satellite and using satellite communication.

It should be noted that, a sequence of performing the step of determining the temperature information and the step of determining the battery level information is not limited in this embodiment of this application. In this embodiment of this application, when the battery level drops to any battery level threshold, it may be determined whether current temperature information is within a temperature range corresponding to the battery level threshold.

For example, during actual application, the electronic device may continuously consume power in a process of using satellite communication in the normal mode. When the battery level information reaches 20%, the electronic device may detect the current temperature information, and if the temperature information is less than or equal to -20°C, the electronic device switches to the ultra power saving mode; or if the temperature information is greater than -20°C, the electronic device continues using satellite communication in the normal mode. The battery level information continues dropping. When the battery level information reaches 5%, the electronic device switches to the ultra power saving mode. This is not limited in this embodiment of this application.

It may be understood that, in this embodiment of this application, the electronic device may further set a single ultra power saving mode switching condition based on the temperature information. For example, the electronic device sets a specific preset temperature (for example, - 20°C) and a specific battery level threshold (20%). When the temperature information is less than or equal to -20°C and the battery level information is less than or equal to 20%, the electronic device switches to the ultra power saving mode. When the temperature information is greater than -20°C or the battery level information is greater than 20%, the electronic device does not switch to the ultra power saving mode. This is not limited in this embodiment of this application.

This can prolong the duration of using satellite communication by the electronic device in the low-temperature scenario, simplify the user operation of switching to the ultra power saving mode, and improve the use experience of the user.

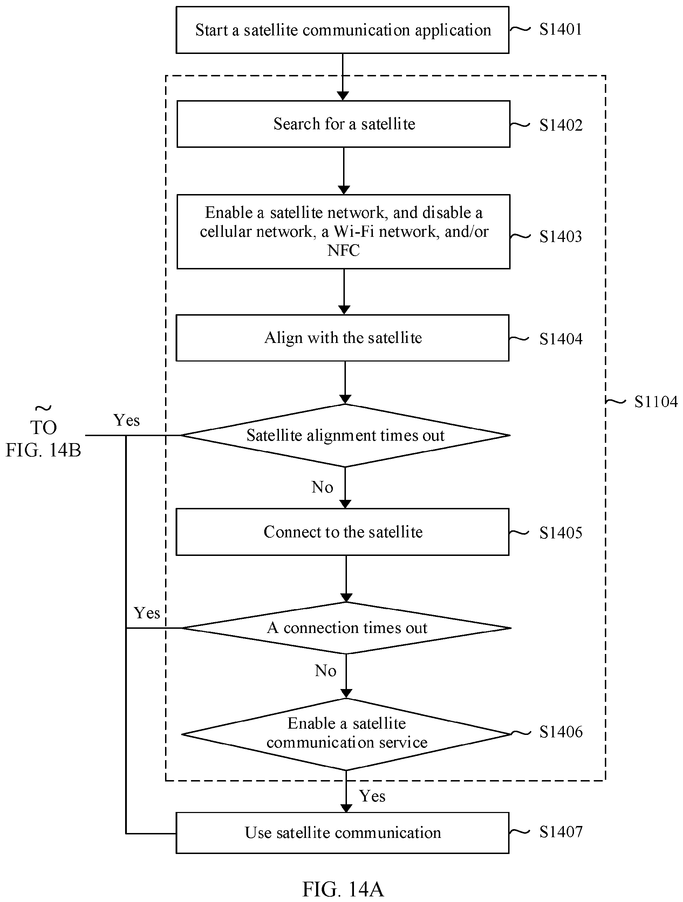

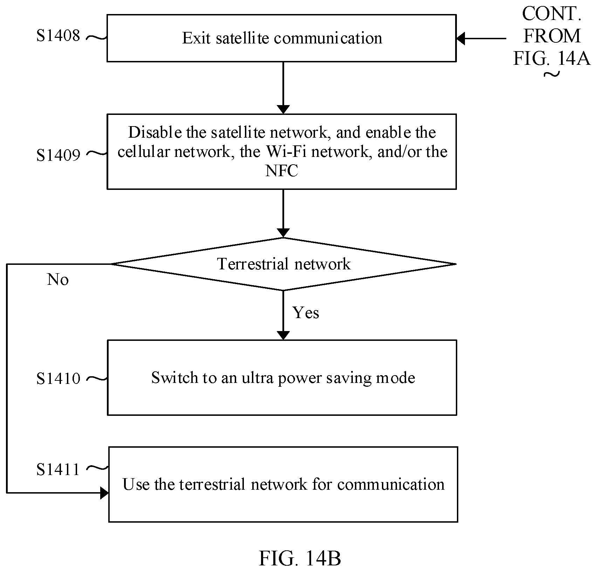

On the basis of the embodiment shown in FIG. 10A to FIG. 10C, FIG. 14A and FIG. 14B are a schematic flowchart of a control method according to an embodiment of this application. As shown in FIG. 14A and FIG. 14B:
S1401: An electronic device starts a satellite communication application.

For this step, refer to the related descriptions in step S1101. Details are not described herein again.

S1402: The electronic device searches for a satellite.

For a satellite search process, refer to the interface shown in FIG. 3C. Details are not described in this embodiment of this application.

S1403: The electronic device enables a satellite network, and disables a cellular network, a Wi-Fi network, and/or NFC.

It may be understood that when the electronic device finds a satellite signal, the electronic device may update a network status, and switch from a terrestrial network to the satellite network. In a possible implementation, the electronic device may disable the terrestrial network when using the satellite network. For example, when enabling the satellite network, the electronic device disables the terrestrial network, such as the cellular network, the Wi-Fi network, and the NFC. Specifically, the electronic device includes one or more chips used for network communication, for example, a satellite chip, a modem (modem) chip, and a Wi-Fi chip. When updating the network status, the electronic device may control the satellite chip to be powered on, the modem chip to be powered off, the Wi-Fi chip to be powered off, and an NFC function to be disabled.

In another possible implementation, the electronic device may not disable the terrestrial network when using the satellite network. For example, when enabling the satellite network, the electronic device maintains enabling of the terrestrial network, such as the cellular network, the Wi-Fi network, and the NFC. This is not limited in this embodiment of this application.

S1404: The electronic device aligns with the satellite.

For a satellite alignment process, refer to the interface shown in FIG. 3D. Details are not described in this embodiment of this application.

S1405: When satellite alignment is completed in a first preset time, the electronic device requests to connect to the satellite.

For a process of connecting to the satellite, refer to the interface shown in FIG. 3E. When the electronic device successfully aligns with the satellite in the first preset time, the electronic device may perform a subsequent step. When satellite alignment times out, satellite alignment fails, and the electronic device can exit the satellite communication application.

S1406: When a satellite connection is completed in a second preset time, the electronic device determines whether to enable a satellite communication service.

The prompt information 316 of the interface shown in FIG. 3E may include duration of the satellite connection. When the electronic device successfully connects to the satellite in the second preset time, the electronic device may perform a subsequent step, for example, determining whether to enable the satellite communication service. When the satellite connection times out and the satellite connection fails, the electronic device can exit the satellite communication application.

Optionally, step S1406 may be an optional step. In some embodiments, the electronic device may determine whether to enable the satellite communication service. For example, after starting the satellite communication application, the electronic device may determine whether to enable the satellite communication service. For another example, when the network connection does not time out, the electronic device may determine whether to enable the satellite communication service. For another example, after performing any step of steps S1401 to S1407, the electronic device may determine whether to enable the satellite communication service. In some other embodiments, the electronic device may alternatively not detect whether the satellite communication service is enabled. This is not limited in this embodiment of this application.

S1407: If the electronic device enables the satellite communication service, the electronic device uses satellite communication.

If the electronic device enables the satellite communication service, the electronic device may use satellite communication. When the electronic device does not enable the satellite communication service, the electronic device may not use satellite communication.

Alternatively, in S1408, when a satellite alignment time is greater than the first preset time, a satellite connection time is greater than the second preset time, a time of losing the satellite connection is greater than a third preset time, and an operation of exiting the satellite communication application is received, the electronic device exits satellite communication.

It may be understood that, when satellite alignment times out, the satellite connection times out, and satellite connection loss times out, the electronic device cannot establish a connection to the satellite. To reduce power consumption, the electronic device can exit the satellite network. When receiving the operation used to exit the satellite communication application, the electronic device also exits the satellite network. The operation used to exit the satellite communication application may be, for example, tapping a close control 309; tapping a disconnect control 402; sliding upward from the bottom of a screen to display a multi-task interface, and closing the satellite communication application on the multi-task interface; closing a satellite communication shortcut control on a control center interface; and/or closing a satellite communication setting item in a setting application. These are not described one by one in this embodiment of this application.

S1409: The electronic device disables the satellite network, and enables the cellular network, the Wi-Fi network, and/or the NFC.

In a process of exiting the satellite network, the electronic device may update the network status. Correspondingly, the electronic device disables the satellite network, and enables the cellular network, the Wi-Fi network, and/or the NFC. Specifically, when updating the network status, the electronic device may control the satellite chip to be powered off, the modem chip to be powered on, the Wi-Fi chip to be powered on, and the NFC function to be restored.

S1410: When there is no terrestrial network, the electronic device switches to the ultra power saving mode.

After enabling the cellular network and/or the Wi-Fi network, the electronic device may detect whether the cellular network and/or the Wi-Fi network can be accessed. When the electronic device may be unable to find the terrestrial network, the electronic device may be unable to access the terrestrial network, and/or quality of the terrestrial network is poor, the electronic device can display an interface shown in FIG. 10C. After a user taps an enable ultra power saving mode control 1005, the electronic device can switch to the ultra power saving mode.

Alternatively, after step S1409, the method further includes the following step:
S1411: When there is the terrestrial network, the electronic device uses the terrestrial network for communication.

In this embodiment of this application, the user has used a satellite communication function, and there is no terrestrial network at a position of the electronic device. There is a high probability that the user uses satellite communication. The electronic device can prompt, by using a pop-up window 1004, the user to use the ultra power saving mode to enable satellite communication, thereby prolonging use duration of satellite communication by the electronic device, and improving use experience of the user.

It should be noted that, this embodiment of this application uses an example in which the electronic device performs satellite communication in the ultra power saving mode when a battery level is lower than a battery level threshold, to describe the control method provided in this embodiment of this application. In some scenarios, the electronic device may restore to a normal mode to use satellite communication. For example, when the electronic device detects a charging state, the electronic device exits the ultra power saving mode. When the electronic device detects the charging state and the battery level is greater than the battery level threshold, the electronic device exits the ultra power saving mode. The electronic device exits the ultra power saving mode based on a specific user gesture. The electronic device exits the ultra power saving mode or the like based on a tap operation on an exit ultra power saving mode control. This is not limited in this embodiment of this application.

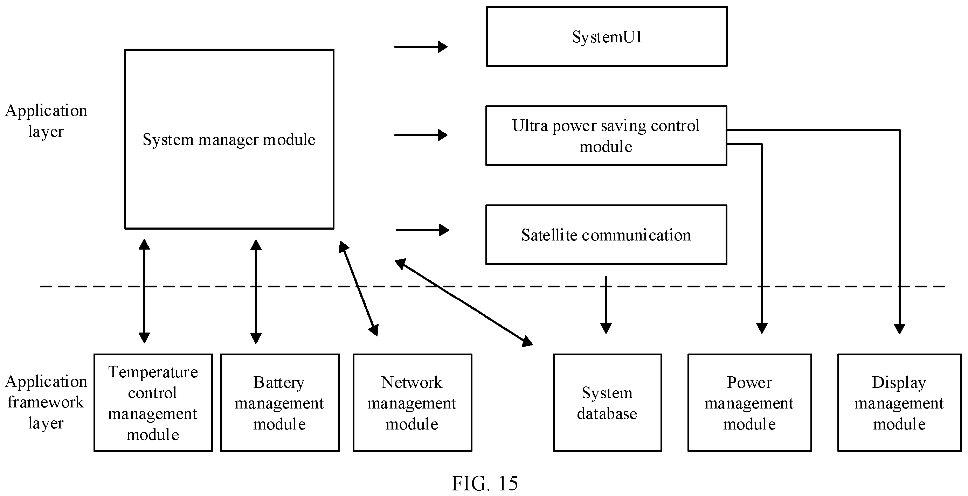

With reference to FIG. 15, the following describes an internal interaction process of an electronic device provided in an embodiment of this application. As shown in FIG. 15:

The electronic device may include an application layer and an application framework layer. The application layer may include a system manager module, systemUI, an ultra power saving control module, and a satellite communication application. The application framework layer may include a temperature control management module, a battery management module, a network management module, a system database, a power management module, and a display management module.

The system manager module is configured to determine, based on temperature information and battery level information, a mode of the electronic device. The mode includes a normal mode and an ultra power saving mode. SysytemUI may be used to switch a display mode of the electronic device, where the display mode may be, for example, an eye protection mode or a dark mode. The ultra power saving control module is configured to control the electronic device to enter or exit an ultra power saving mode. The satellite communication application may be used to use a satellite network for communication. The temperature control management module may be configured to monitor a temperature change. The battery management module monitors a battery level change. The network management module may be configured to change a network based on a network strategy. The system database is used to store satellite communication data. The power management module may be configured to execute a power saving strategy of the ultra power saving mode. The display management module may be configured to adjust luminance of a display.

Specifically, the temperature sensor may measure the temperature information in real time, and report the temperature information to the temperature control management module by using a corresponding sensor driver. The system manager module may obtain the temperature information from the temperature management module to monitor the temperature change. The system manager module can obtain the battery level information from the battery management module to monitor the battery level change. The system manager module may obtain a network status from the network management module. The system manager module obtains a satellite mode from the system database to monitor a satellite mode change.

In a possible implementation, after a user taps an icon of the satellite communication application, the electronic device starts the satellite communication application, and the satellite communication application may indicate the system database to update a satellite connection status. The system manager module can detect the satellite mode change from the system database. The system manager module obtains the battery level information from the battery management module. The system manager module determines whether to use the ultra power saving mode based on a value relationship between the battery level information and a first battery level threshold.

If a current battery level is less than the first battery level threshold (for example, 5%), the system manager module may broadcast entrance to the ultra power saving mode. Correspondingly, systemUI switches the display mode to the dark mode to display an interface in the ultra power saving mode. The ultra power saving control module delivers an ultra power saving mode management strategy to both the power management module and the display management module. The power management module sets a low battery level mode. For example, the power management module enables a power protection mode (power save mode). The display management module can reduce screen luminance, for example, reduce a frequency of a pulse-width modulation (pulse-width modulation, PWM) signal, reduce maximum screen luminance, and the like.

Optionally, in a process of starting the satellite communication application, the network management module may control to disable a cellular network, disable a Wi-Fi network, or the like.

This possible implementation may correspond to the embodiment shown in FIG. 6A to FIG. 6C, FIG. 7A to FIG. 7C, and/or FIG. 11A and FIG. 11B. Details are not described herein again.

In another possible implementation, after a user taps an icon of the satellite communication application, the electronic device starts the satellite communication application, and the satellite communication application may indicate the system database to update a satellite connection status. The system manager module can detect the satellite mode change from the system database. The system manager module obtains the battery level information from the battery management module, and obtains the temperature information from the temperature control management module. The system manager module obtains a corresponding battery level threshold based on the temperature information, and determines whether to use the ultra power saving mode based on a value relationship between current battery level information and the battery level threshold.

For example, the temperature information corresponds to a second battery level threshold. When a current temperature is less than a preset temperature (-20°C) and a current battery level is less than the second battery level threshold (for example, 20%), the system manager module may broadcast entering the ultra power saving mode. Correspondingly, systemUI switches the display mode to the dark mode. The ultra power saving control module delivers the ultra power saving mode management strategy to both the power management module and the display management module. The power management module sets the low battery level mode. The display management module reduces the screen luminance.

This possible implementation may correspond to the embodiment shown in FIG. 8A to FIG. 8C, FIG. 9A to FIG. 9C, FIG. 12, and/or FIG. 13A and FIG. 13B. Details are not described herein again.

In still another possible implementation, the satellite communication application updates the satellite connection status, for example, updates the satellite connection status from satellite communication started to satellite communication exited. The system database obtains the satellite connection status and reports the status to the system manager module. The system manager module may obtain the network status from the network management module. If there is currently no terrestrial network, the system manager module may indicate the satellite communication application to display prompt information, for example, prompt information 1004. After the satellite communication application receives a trigger operation on an enable ultra power saving mode control 1005, the system manager module may broadcast entering the ultra power saving mode. Correspondingly, systemUI switches the display mode to the dark mode. The ultra power saving control module delivers the ultra power saving mode management strategy to both the power management module and the display management module. The power management module sets the low battery level mode. The display management module reduces the screen luminance.

This possible implementation may correspond to the embodiment shown in FIG. 10A to FIG. 10C and/or FIG. 14A and FIG. 14B. Details are not described herein again.

It should be noted that in this embodiment of this application, the system manager module may separately read the temperature information from the temperature control management module, read the battery level information from the battery management module, read the network status from the network management module, and read the satellite mode from the system database. The temperature control management module may further report the temperature information to the system manager module, the battery management module may further report the battery level information to the system manager module, the network management module may further report the network status to the system manager module, and the system database may further report the satellite mode to the system manager module. A manner in which the system manager module obtains data is not limited in this embodiment of this application.

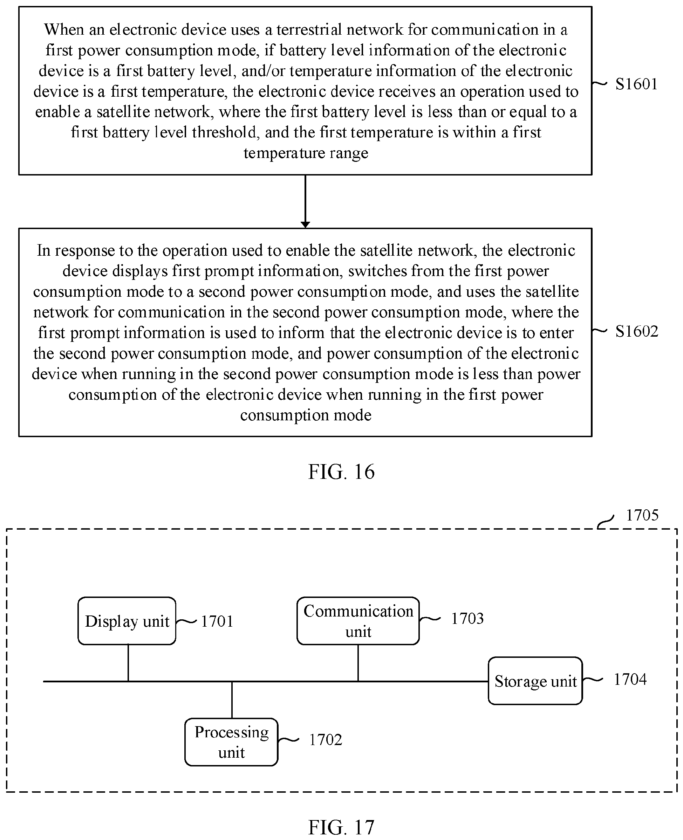

Based on the foregoing embodiment, an embodiment of this application provides a control method. For example, FIG. 16 is a schematic flowchart of a control method according to an embodiment of this application.

As shown in FIG. 16, the control method may include the following steps.

S1601: When an electronic device uses a terrestrial network for communication in a first power consumption mode, if battery level information of the electronic device is a first battery level, and/or temperature information of the electronic device is a first temperature, the electronic device receives an operation used to enable a satellite network, where the first battery level is less than or equal to a first battery level threshold, and the first temperature is within a first temperature range.

A first power consumption mode may be understood as a normal mode in this embodiment of this application. The terrestrial network may be, for example, a cellular network and a Wi-Fi network. The first battery level threshold may correspond to the first battery level threshold in embodiments shown in FIG. 6A to FIG. 9C. The first battery level threshold is, for example, 5%. The first temperature range may correspond to any one of the plurality of temperature ranges in embodiments shown in FIG. 8A to FIG. 8C and FIG. 9A to FIG. 9C. Two temperature ranges are used as an example. The temperature information is greater than -20°C, and may be within the first temperature range.

The operation used to enable a satellite network may include at least one of the following: tapping an icon of a satellite communication application on a desktop; tapping the enable satellite control 305 on the interface shown in FIG. 6A; tapping a satellite communication shortcut control on a control center interface, to start the satellite communication shortcut control; and tapping a satellite communication setting item on a setting application, to start the satellite communication setting item.

S1602: In response to the operation used to enable a satellite network, the electronic device displays first prompt information, switches from the first power consumption mode to a second power consumption mode, and uses the satellite network for communication in the second power consumption mode, where the first prompt information is used to inform that the electronic device is to enter the second power consumption mode, and power consumption of the electronic device when running in the second power consumption mode is less than power consumption of the electronic device when running in the first power consumption mode.

The second power consumption mode may be understood as an ultra power saving mode in this embodiment of this application. Power consumption of the electronic device when running in the ultra power saving mode is less than power consumption of the electronic device when running in the normal mode.

The first prompt information may correspond to the prompt information 601 on the interface shown in FIG. 6B, or the prompt information 801 on the interface shown in FIG. 8B. That the electronic device uses the satellite network for communication in the second power consumption mode may be understood as follows: The electronic device accesses the satellite network in the ultra power saving mode, and/or uses the satellite network to perform a service such as a satellite call, a satellite video, and receiving and sending messages.

It should be noted that, in a first possible implementation, this embodiment of this application may correspond to the embodiment shown in FIG. 6A to FIG. 6C or FIG. 11A and FIG. 11B, and a condition for the electronic device to determine whether to switch to the ultra power saving mode is whether the battery level information is less than or equal to the first battery level threshold. When the electronic device uses the terrestrial network, a battery level may be low. A user wants to enable and use the satellite network when the battery level of the electronic device is low (for example, the first battery level is less than or equal to the first battery level threshold). In this case, in response to the operation used to enable a satellite network, the electronic device can switch to the ultra power saving mode, and continue enabling and using the satellite network in the ultra power saving mode.

The determining condition in the first possible implementation does not involve a temperature. In a second possible implementation, this embodiment of this application may further correspond to the embodiment shown in FIG. 12. A plurality of temperature ranges are set for the electronic device, for example, the first temperature range, a second temperature range, and a third temperature range... Any temperature range corresponds to a battery level threshold. For example, the first temperature range corresponds to the first battery level threshold. The condition for the electronic device to determine whether to switch to the ultra power saving mode is whether the battery level information is less than or equal to a battery level threshold corresponding to a temperature range in which current temperature information is located. In this case, when the battery level is low (for example, the first battery level is less than or equal to the first battery level threshold, the first temperature is within the first temperature range, and the first temperature range corresponds to the first battery level threshold), and the satellite communication network is enabled, the electronic device can switch to the ultra power saving mode.

Additionally/alternatively, in a third possible implementation, this embodiment of this application may further correspond to the embodiment shown in FIG. 8A to FIG. 8C or FIG. 13A and FIG. 13B. Two temperature ranges may also be set in this embodiment of this application: the first temperature range and the second temperature range. The first temperature range may be a normal temperature range, for example, greater than -20°C. The second temperature range may be a low-temperature range, for example, less than or equal to -20°C. The condition for the electronic device to determine whether to switch to the ultra power saving mode is whether the battery level information is less than or equal to the first battery level threshold when the temperature information is within the first temperature range, or whether the battery level information is less than or equal to the second battery level threshold when the temperature information is within the second temperature range. For example, the first temperature is within the first temperature range. When the battery level is low (for example, the first battery level is less than or equal to the first battery level threshold, the first temperature is within the first temperature range, and the first temperature range corresponds to the first battery level threshold), and the satellite communication network is enabled, the electronic device can switch to the ultra power saving mode.

It may be understood that the electronic device may use the battery level information as a standard for whether to switch to the ultra power saving mode, and the electronic device may use the battery level information and the temperature information as a standard for whether to switch to the ultra power saving mode. This is not limited in this embodiment of this application.

In this way, when the battery level is low and a user wants to use satellite communication, the electronic device can automatically enter the ultra power saving mode. This prolongs the use duration of the electronic device and the duration for satellite communication, simplifies the user operation of switching to the ultra power saving mode, and improves the use experience of the user.

Optionally, when the electronic device uses the terrestrial network for communication in the first power consumption mode, if the battery level information of the electronic device is a second battery level, and/or the temperature information of the electronic device is a second temperature, the electronic device receives the operation used to enable a satellite network, where the second battery level is less than or equal to a second battery level threshold, the second temperature is within the second temperature range, the second battery level threshold is greater than the first battery level threshold, and the second temperature is less than or equal to the first temperature; and in response to the operation used to enable a satellite network, the electronic device displays first prompt information, switches from the first power consumption mode to a second power consumption mode, and uses the satellite network for communication in the second power consumption mode.

The second battery level threshold may correspond to the second battery level threshold in embodiments shown in FIG. 8A to FIG. 8C and FIG. 9A to FIG. 9C. The second battery level threshold is, for example, 20%. The second temperature range may correspond to any one of the plurality of temperature ranges in embodiments shown in FIG. 8A to FIG. 8C and FIG. 9A to FIG. 9C. Two temperature ranges are used as an example. The temperature information is less than or equal to -20°C, and may be within the second temperature range. The first prompt information may correspond to the prompt information 801 on the interface shown in FIG. 8B.

It may be understood that the temperature information is negatively correlated to the battery level threshold. When a temperature is lower, a battery level threshold corresponding to a temperature range in which the temperature is located is higher. For example, that the second temperature is less than or equal to the first temperature may be understood as: Any temperature in the second temperature range is less than or equal to any temperature within the first temperature range. When the temperature within the second temperature range is lower, the second battery level threshold is higher (greater than the first battery level threshold).

This step may correspond to the second possible implementation shown in FIG. 16. The condition for the electronic device to determine whether to switch to the ultra power saving mode is whether the battery level information is less than or equal to a battery level threshold corresponding to a temperature range in which current temperature information is located. In this case, when the battery level is low (the second battery level is less than or equal to the second battery level threshold, the second temperature is within the second temperature range, and the second temperature range corresponds to the second battery level threshold), and the satellite communication network is enabled, the electronic device can switch to the ultra power saving mode.

Alternatively, this step may correspond to the third possible implementation shown in FIG. 16. The condition for the electronic device to determine whether to switch to the ultra power saving mode is whether the battery level information is less than or equal to the first battery level threshold when the temperature information is within the first temperature range, or whether the battery level information is less than or equal to the second battery level threshold when the temperature information is within the second temperature range. For example, the second temperature is within the second temperature range. When the battery level is low (for example, the second battery level is less than or equal to 20%, and the second temperature is less than or equal to -20°C), and the satellite communication network is enabled, the electronic device can switch to the ultra power saving mode.

Alternatively, the step may be: setting a temperature range, namely, the second temperature range in this embodiment of this application. The second temperature range may be a low-temperature range, for example, less than or equal to -20°C. The condition for the electronic device to determine whether to switch to the ultra power saving mode is whether the battery level information is less than or equal to the second battery level threshold when the temperature information is within the second temperature range. For example, the second temperature is within the second temperature range. When the battery level is low (for example, the second battery level is less than or equal to 20%, and the second temperature is less than or equal to -20°C), and the satellite communication network is enabled, the electronic device can switch to the ultra power saving mode. In addition, if the temperature information is not within the second temperature range, the electronic device does not switch to the ultra power saving mode.

This can prolong the duration of using satellite communication by the electronic device in the low-temperature scenario, simplify the user operation of switching to the ultra power saving mode, and improve the use experience of the user.

Optionally, the method further includes the following step:
When the electronic device uses the satellite network for communication in the first power consumption mode, if the battery level information of the electronic device is the first battery level threshold, and/or the temperature information of the electronic device is the first temperature, the electronic device displays the first prompt information, switches from the first power consumption mode to the second power consumption mode, and uses the satellite network for communication in the second power consumption mode.

This step may correspond to the embodiment shown in FIG. 7A to FIG. 7C or FIG. 11A and FIG. 11B. The user may use the satellite network in the normal mode, and the electronic device continuously consumes power; when the battery level information drops to the first battery level threshold (for example, 5%), the electronic device may automatically switch to the ultra power saving mode. In a switching process, the first prompt information (for example, the prompt information 701) may be displayed.

This step may also correspond to the embodiment shown in FIG. 9A to FIG. 9C, FIG. 12, or FIG. 13A and FIG. 13B. The user may use the satellite network in the normal mode, and the electronic device continuously consumes power; the temperature information of the electronic device is within the first temperature range (greater than -20°C), the battery level threshold is the first battery level threshold, and the first battery level threshold is, for example, 5%; when the battery level information drops to 5%, the electronic device may automatically switch to the ultra power saving mode. In a switching process, the first prompt information (for example, the prompt information 901) may be displayed.

In this way, when the battery level is low and a user wants to use satellite communication, the electronic device can automatically enter the ultra power saving mode. This prolongs the use duration of the electronic device and the duration for satellite communication, simplifies the user operation of switching to the ultra power saving mode, and improves the use experience of the user.

Optionally, the method further includes the following step:
When the electronic device uses the satellite network for communication in the first power consumption mode, if the battery level information of the electronic device is the second battery level threshold, and/or the temperature information of the electronic device is the second temperature, the electronic device displays the first prompt information, switches from the first power consumption mode to the second power consumption mode, and uses the satellite network for communication in the second power consumption mode.

This step may correspond to the embodiment shown in FIG. 9A to FIG. 9C, FIG. 12, or FIG. 13A and FIG. 13B. The user may use the satellite network in the normal mode, and the electronic device continuously consumes power; the temperature information of the electronic device is within the second temperature range (less than or equal to -20°C), the battery level threshold is the second battery level threshold, and the second battery level threshold is, for example, 20%; when the battery level information drops to 20%, the electronic device may automatically switch to the ultra power saving mode. In a switching process, the first prompt information (for example, the prompt information 901) may be displayed.

This can prolong the duration of using satellite communication by the electronic device in the low-temperature scenario, simplify the user operation of switching to the ultra power saving mode, and improve the use experience of the user.

It should be noted that, in this embodiment of this application, the electronic device can switch to the ultra power saving mode without affecting use of satellite communication. For example, if the electronic device switches to the ultra power saving mode on the interface shown in FIG. 6B, the electronic device can continue performing, in the ultra power saving mode, for example, the interface shown in FIG. 3B to the interface shown in FIG. 3F. For another example, if the electronic device switches to the ultra power saving mode on the interface shown in FIG. 7B, the electronic device can continue displaying, in the ultra power saving mode, the interface shown in FIG. 7C. For another example, the electronic device switches to the ultra power saving mode in a process of a satellite call, a satellite video, composing a message, or the like. After switching, the electronic device may hold the satellite call, hold the satellite video call, or keep content on a message composing interface. This is not limited in this embodiment of this application.

After the electronic device switches from the first power consumption mode to the second power consumption mode, the method includes:
The electronic device displays a first interface, where the first interface includes a sign of the second power consumption mode, a control used to exit the second power consumption mode, second prompt information, a first pop-up window, and/or a status bar; the second prompt information is used to prompt for the battery level information of the electronic device, and available duration of performing satellite communication by the electronic device in the second power consumption mode; the first pop-up window includes prompt information used to inform that the satellite network has been accessed, a signal quality sign of the satellite network, position information of the electronic device, and a sign of a satellite position; and the status bar includes the battery level information of the electronic device and a sign of the satellite network.

The first interface may correspond to the interface shown in FIG. 5D, the interface shown in FIG. 6C, the interface shown in FIG. 7C, the interface shown in FIG. 8C, or the interface shown in FIG. 9C. The interface shown in FIG. 5D is used as an example. The sign of the second power consumption mode may correspond to the ultra power saver sign 504. The control used to exit the second power consumption mode may correspond to the exit control 505. The second prompt information may correspond to the prompt information 508. The first pop-up window may correspond to the pop-up window 401. The status bar may correspond to the status bar 509.

In the pop-up window 401, the prompt information indicating that the satellite network has been accessed may be, for example, prompt information "The satellite signal is strong. Please hold your phone steady". The signal quality sign of the satellite network may be signal bars, for example, four signal bars. The position information of the electronic device may be, for example, longitude, latitude, and altitude. The sign of the satellite position may be, for example, a scaled-down displayed animation 320 indicating a completed connection.

The battery level information in the status bar 509 is the same as the battery level information in the second prompt information, and the sign of the satellite network may be, for example, a sign on the left of the battery level information in the status bar 509.

An interface layout of all controls on the first interface is not limited in this embodiment of this application.

In this way, the electronic device can access the satellite network in the ultra power saving mode, thereby saving power and prolonging the use duration and standby duration.

Optionally, after the electronic device displays the first interface, the method includes:
The electronic device receives an operation used to exit the second power consumption mode, where the operation used to exit the second power consumption mode includes at least one of the following: a trigger operation on the control used to exit the second power consumption mode, and/or the battery level information of the electronic device is greater than a third battery level threshold; and that the electronic device uses the satellite network for communication in the first power consumption mode includes: In response to the operation used to exit the second power consumption mode, the electronic device switches from the second power consumption mode to the first power consumption mode, and uses the satellite network for communication in the first power consumption mode.

The control used to exit the second power consumption mode may be, for example, the exit control 505 on the interface shown in FIG. 5C; may be, for example, the ultra power saver control 502 in a started state on the control center interface; may be, for example, a setting item in a started state of the ultra power saving mode in the setting application; or the like. The third battery level threshold may be a battery level threshold used to exit the second power consumption mode. The third battery level threshold may be a fixed value. For example, in a charging process, if the battery level information is greater than or equal to the third battery level threshold, the electronic device switches back to the normal mode. The third battery level threshold may be a variable value. For example, when the battery level information is the third battery level threshold and a charging state is detected, the electronic device switches back to the normal mode. The operation used to exit the second power consumption mode may alternatively be a specific gesture. An operation of switching from the ultra power saving mode to the normal mode is not limited in this embodiment of this application.

It may be understood that when the electronic device switches from the first power consumption mode to the second power consumption mode, an application process of the satellite network is not affected. Similarly, when the electronic device switches from the second power consumption mode back to the second power consumption mode, the application process of the satellite network is not affected.

In this way, when the battery level is low, the electronic device can switch to the ultra power saving mode, thereby prolonging the duration for satellite communication; when the battery level is high, the electronic device can exit the ultra power saving mode and provide the user with more functional services in a normal mode, improving the use experience of the user.

Optionally, the first prompt information is further used to prompt for delay information of the electronic device entering the second power consumption mode; and the delay information is displayed in at least one of the following manners: fixedly displaying the delay information in the first prompt information, or decreasing the delay information in the first prompt information with time.

The delay information may be, for example, 10 seconds in the prompt information 601, or 10 seconds in the prompt information 801. Delay information in the prompt information 601 may be the same as or different from delay information in the prompt information 801. In this way, the electronic device can display prompt information for a period of time, to inform the user that the electronic device is to enter the ultra power saving mode later. In addition, in a process in which the electronic device displays the first prompt information, the electronic device can prompt, by decreasing the delay information, the user with a remaining time for switching to the ultra power saving mode, and switch to the ultra power saving mode when the delay information is 0.

Optionally, the method further includes the following step:
When the electronic device uses the terrestrial network for communication in the first power consumption mode, the electronic device receives an operation used to switch to the second power consumption mode; in response to the operation used to switch to the second power consumption mode, the electronic device switches from the first power consumption mode to the second power consumption mode, and displays a second interface, where the second interface includes a sign of the second power consumption mode, the control used to exit the second power consumption mode, third prompt information, and/or the status bar; the third prompt information is used to prompt for the battery level information of the electronic device, and available duration of the electronic device in the second power consumption mode; and the status bar includes the battery level information of the electronic device and a sign of the terrestrial network; when the terrestrial network is used for communication in the second power consumption mode, and the battery level information of the electronic device is the first battery level, the electronic device receives an operation used to enable a satellite network; and in response to the operation used to enable a satellite network, the electronic device uses the satellite network for communication in the second power consumption mode.

The operation used to switch to the second power consumption mode may be, for example, a trigger operation on the ultra power saver control 502 in a closed state on the control center interface shown in FIG. 5B, may be, for example, a trigger operation on the setting item in a closed state of the ultra power saving in the setting application, or may be, for example, another user gesture. Details are not described in this embodiment of this application.

The second interface may correspond to the interface shown in FIG. 5C. The sign of the second power consumption mode may correspond to the ultra power saver sign 504. The control used to exit the second power consumption mode may correspond to the exit control 505. The third prompt information may correspond to the prompt information 506. The sign of the terrestrial network may be, for example, the sign of the cellular network in the status bar on the interface shown in FIG. 5C, or may be the sign of the Wi-Fi network.

It can be learned through comparison between the first interface and the second interface that, when satellite communication is not enabled, the prompt information 506 is "Battery 80%. 86 h and 20 min remaining". After satellite communication is enabled, the prompt information 508, is for example, "Battery 79%. 70 h and 30 min remaining". In the two scenarios, the battery level is approximately the same, but the available duration is different, because satellite communication consumes more power during running. With a same battery level, the available duration is longer when satellite communication is not enabled, and the available duration is shorter after satellite communication is enabled. When satellite communication is enabled, the electronic device may predict the available duration with reference to a remaining battery level and power consumption during use or standby of satellite communication.

This step may correspond to the embodiment shown in FIG. 5A to FIG. 5D. The electronic device can switch to the ultra power saving mode based on a user operation. In the ultra power saving mode, the electronic device can access and use the satellite network based on an operation used to enable the satellite network. When the battery level information drops to a low value, (for example, a current battery level is the first battery level, and the first battery level is less than 5%), the electronic device can continue using the ultra power saving mode to perform satellite communication, avoiding a scenario of forcibly exiting satellite communication when a battery level is low in a conventional technology. This increases use duration of satellite communication.

Optionally, the using the satellite network for communication in the second power consumption mode includes: The electronic device accesses the satellite network in the second power consumption mode, and/or the electronic device uses the satellite network to perform a satellite communication service in the second power consumption mode, where the satellite communication service includes one or more of the following: a satellite call, reception and transmission of a satellite message, satellite video communication, and/or satellite voice communication.

It may be understood that, for this step, refer to the related descriptions in step S1105. That the electronic device accesses the satellite network in the second power consumption mode may correspond to that after the user accesses the satellite network in the ultra power saving mode, the user does not use the satellite communication service, and the electronic device is in a standby state. During standby, the electronic device maintains the connection to the satellite network. That the electronic device accesses the satellite network in the second power consumption mode, and that the electronic device uses the satellite network to perform the satellite communication service in the second power consumption mode may correspond to that when maintaining the connection to the satellite network, the electronic device exchanges information with another electronic device through the satellite network. An information exchange manner may correspond to the satellite communication service, for example, a satellite call, receiving and sending a satellite message, satellite video communication, and/or satellite voice communication.

In this way, power can be saved when the electronic device in a standby state accesses the satellite network in the ultra power saving mode and/or during use of the satellite communication service, prolonging the satellite communication duration. In addition, satellite communication can support a plurality of communication services, enriching application scenarios of satellite communication and improving communication experience of the user.

Optionally, the method further includes the following step:
When the electronic device uses the satellite network for communication in the first power consumption mode, the electronic device receives an operation used to exit the satellite network; in response to the operation used to exit the satellite network, the electronic device disconnects a connection to the satellite network; when being unable to access the terrestrial network, the electronic device displays a second pop-up window, where the second pop-up window includes a control used to switch to the second power consumption mode; and when receiving the trigger operation on the control used to switch to the second power consumption mode, the electronic device switches from the first power consumption mode to the second power consumption mode.

The operation used to exit the satellite network may be a trigger operation on the disconnect control 402, a trigger operation on the close control 309, an operation of closing the satellite communication application, a satellite connection failure, or the like.

The operation of closing the satellite communication application may be, for example, an operation of closing the satellite communication shortcut control in the control center interface; closing the satellite communication setting item in the setting application; or sliding upward from the bottom to display a multi-task interface, and closing the satellite communication application on the multi-task interface. The satellite connection failure is, for example, satellite alignment timeout, satellite connection timeout, or satellite loss timeout.

The second pop-up window may be the pop-up window 1004. The control used to switch to the second power consumption mode may correspond to the enable ultra power saving mode control 1005. The electronic device may quickly display the ultra power saving mode based on the enable ultra power saving mode control 1005.

In this way, when exiting satellite communication and being unable to access the terrestrial network, the electronic device can prompt, by using the second pop-up window, the user to enter the ultra power saving mode and use satellite communication, to ensure a communication service, thereby improving the use experience of the user.

The foregoing describes the control methods in embodiments of this application. The following describes an apparatus that is provided in an embodiment of this application and that performs the foregoing control methods. A person skilled in the art may understand that the methods and the apparatus may be combined and referenced with each other. The related apparatus provided in embodiments of this application may perform the steps in the foregoing control methods.

As shown in FIG. 17, the control apparatus 1700 may be used in a communication device, a circuit, a hardware component, or a chip. The control apparatus includes: a display unit 1701 and a processing unit 1702. The display unit 1701 is configured to support the control apparatus 1700 in performing a display step. The processing unit 1702 is configured to support the control apparatus 1700 to perform an information processing step.

In a possible implementation, the control apparatus 1700 may further include a communication unit 1703. Specifically, the communication unit is configured to support the control apparatus 1700 in performing steps of sending data and receiving data. The communication unit 1703 may be an input interface or an output interface, a pin, a circuit, or the like.

In a possible embodiment, the controlling apparatus may further include: a storage unit 1704. The processing unit 1702 and the storage unit 1704 are connected through a line. The storage unit 1704 may include one or more memories, and the memory may be a device in one or more devices or circuits that is configured to store a program or data. The storage unit 1704 may exist independently, and is connected to the processing unit 1702 of the control apparatus through a communication line. The storage unit 1704 may be alternatively integrated with the processing unit 1702.

The storage unit 1704 may store computer-executable instructions of the methods of the terminal device, so that the processing unit 1702 performs the methods in the foregoing embodiments. The storage unit 1704 may be a register, a cache, a RAM, or the like, and the storage unit 1704 may be integrated with the processing unit 1702. The storage unit 1704 may be a read-only memory (read-only memory, ROM) or another type of static storage device that may store static information and instructions. The storage unit 1704 may be independent of the processing unit 1702.

The control methods provided in embodiments of this application may be applied to an electronic device with a communication function. The electronic device includes an electronic device. For a specific device form and the like of the electronic device, refer to the foregoing related descriptions. Details are not described herein again.

An embodiment of this application provides an electronic device. The electronic device includes: a processor and a memory. The memory stores computer-executable instructions. The processor executes the computer-executable instructions stored in the memory, to enable the electronic device to perform the foregoing methods.

An embodiment of this application provides a chip system. The chip system includes at least one processor and a communication interface. The communication interface and the at least one processor are interconnected through a line. The at least one processor is configured to run a computer program or instructions, to perform the foregoing methods. Implementation principles and technical effects thereof are similar to those of the foregoing related embodiments. Details are not described herein again.

An embodiment of this application further provides a computer-readable storage medium. The computer-readable storage medium stores a computer program. The computer program is executed by a processor to implement the foregoing methods. All or some of the methods described in the foregoing embodiments may be implemented through software, hardware, firmware, or any combination thereof. If the methods are implemented through the software, a function may be stored on the computer-readable medium as one or more instructions or code or transmitted on the computer-readable medium. The computer-readable medium may include a computer storage medium and communication medium, and may also include any medium that can transfer a computer program from one place to another. The storage medium may be any target medium accessible by a computer.

In a possible implementation, the computer-readable medium may include a RAM, a ROM, a compact disc read-only memory (compact disc read-only memory, CD-ROM) or another optical disc memory, a magnetic disk memory or another magnetic storage device, or any other medium that is intended to carry or store required program code in a form of instruction or data structure, and may be accessed by the computer. In addition, any connection is appropriately referred to as a computer-readable medium. For example, if a coaxial cable, an optical fiber cable, a twisted pair, a digital subscriber line (Digital Subscriber Line, DSL), or a wireless technology (like infrared, radio, and a microwave) is used to transmit software from a website, a server, or another remote source, the coaxial cable, the optical fiber cable, the twisted pair, the DSL, or the wireless technology such as infrared, radio, and a microwave is included in a definition of the medium. A disk and an optical disc as used in this specification include an optical disc, a laser disk, a digital versatile disc (Digital Versatile Disc, DVD), a floppy disk, and a blue-ray disc, where the disk generally reproduces data by magnetic means, while the optical disc optically reproduces data by using a laser. The foregoing combination should also be included in the scope of the computer-readable medium.

An embodiment of this application provides a computer program product. The computer program product includes a computer program, and when the computer program is run, a computer is enabled to perform the foregoing methods.

Embodiments of this application are described with reference to the flowcharts and/or block diagrams of the method, the device (system), and the computer program product according to embodiments of this application. It should be understood that computer program instructions may be used to implement each procedure and/or each block in the flowcharts and/or the block diagrams and a combination of a procedure and/or a block in the flowcharts and/or the block diagrams. These computer program instructions may be provided to a general-purpose computer, a dedicated computer, an embedded processor, or a processing unit of another programmable device to generate a machine, so that the instructions executed by the computer or the processing unit of the another programmable data processing device generate an apparatus for implementing a specific function in one or more procedures in the flowcharts and/or in one or more blocks in the block diagrams.

Objectives, technical solutions, and beneficial effects of the present invention are further described in detail in the foregoing specific implementations. It should be understood that the foregoing descriptions are merely specific implementations of the present invention, and are not intended to limit the protection scope of the present invention. Any modification, equivalent replacement, improvement, or the like made based on the technical solutions of the present invention should fall within the protection scope of the present invention.

## Claims

1. A control method, applied to an electronic device, and comprising:
when the electronic device uses a terrestrial network for communication in a first power consumption mode, if battery level information of the electronic device is a first battery level, and/or temperature information of the electronic device is a first temperature, receiving, by the electronic device, an operation used to enable a satellite network, wherein the first battery level is less than or equal to a first battery level threshold, and the first temperature is within a first temperature range; and
in response to the operation used to enable a satellite network, displaying, by the electronic device, first prompt information, switching from the first power consumption mode to a second power consumption mode, and using the satellite network for communication in the second power consumption mode, wherein the first prompt information is used to inform that the electronic device is to enter the second power consumption mode, and power consumption of the electronic device when running in the second power consumption mode is less than power consumption of the electronic device when running in the first power consumption mode.

2. The method according to claim 1, further comprising:
when the electronic device uses the terrestrial network for communication in the first power consumption mode, if the battery level information of the electronic device is a second battery level, and/or the temperature information of the electronic device is a second temperature, receiving, by the electronic device, the operation used to enable a satellite network, wherein the second battery level is less than or equal to a second battery level threshold, the second temperature is within the second temperature range, the second battery level threshold is greater than the first battery level threshold, and the second temperature is less than or equal to the first temperature; and
in response to the operation used to enable a satellite network, displaying, by the electronic device, the first prompt information, switching from the first power consumption mode to the second power consumption mode, and using the satellite network for communication in the second power consumption mode.

3. The method according to claim 1 or 2, further comprising:
when the electronic device uses the satellite network for communication in the first power consumption mode, if the battery level information of the electronic device is the first battery level threshold, and/or the temperature information of the electronic device is the first temperature, displaying, by the electronic device, the first prompt information, switching from the first power consumption mode to the second power consumption mode, and using the satellite network for communication in the second power consumption mode.

4. The method according to any one of claims 1 to 3, further comprising:
when the electronic device uses the satellite network for communication in the first power consumption mode, if the battery level information of the electronic device is the second battery level threshold, and/or the temperature information of the electronic device is the second temperature, displaying, by the electronic device, the first prompt information, switching from the first power consumption mode to the second power consumption mode, and using the satellite network for communication in the second power consumption mode.

5. The method according to any one of claims 1 to 4, wherein after the switching, by the electronic device, from the first power consumption mode to the second power consumption mode, the method comprises:
displaying, by the electronic device, a first interface, wherein the first interface comprises a sign of the second power consumption mode, a control used to exit the second power consumption mode, second prompt information, a first pop-up window, and/or a status bar; the second prompt information is used to prompt for the battery level information of the electronic device, and available duration of performing satellite communication by the electronic device in the second power consumption mode; the first pop-up window comprises prompt information used to inform that the satellite network has been accessed, a signal quality sign of the satellite network, position information of the electronic device, and a sign of a satellite position; and the status bar comprises the battery level information of the electronic device and a sign of the satellite network.

6. The method according to any one of claims 2 to 5, wherein after the displaying, by the electronic device, a first interface, the method comprises:
receiving, by the electronic device, an operation used to exit the second power consumption mode, wherein the operation used to exit the second power consumption mode comprises at least one of the following: a trigger operation on the control used to exit the second power consumption mode, and/or the battery level information of the electronic device is greater than a third battery level threshold; and
that the electronic device uses the satellite network for communication in the first power consumption mode comprises:
in response to the operation used to exit the second power consumption mode, the electronic device switches from the second power consumption mode to the first power consumption mode, and uses the satellite network for communication in the first power consumption mode.

7. The method according to any one of claims 1 to 6, wherein the first prompt information is further used to prompt for delay information of the electronic device entering the second power consumption mode; and the delay information is displayed in at least one of the following manners: fixedly displaying the delay information in the first prompt information, or decreasing the delay information in the first prompt information with time.

8. The method according to any one of claims 1 to 7, further comprising:
when the electronic device uses the terrestrial network for communication in the first power consumption mode, receiving, by the electronic device, an operation used to switch to the second power consumption mode;
in response to the operation used to switch to the second power consumption mode, switching, by the electronic device, from the first power consumption mode to the second power consumption mode, and displaying a second interface, wherein the second interface comprises the sign of the second power consumption mode, the control used to exit the second power consumption mode, third prompt information, and/or the status bar; the third prompt information is used to prompt for the battery level information of the electronic device, and available duration of the electronic device in the second power consumption mode; and the status bar comprises the battery level information of the electronic device and a sign of the terrestrial network;
when the terrestrial network is used for communication in the second power consumption mode, and the battery level information of the electronic device is the first battery level, receiving, by the electronic device, the operation used to enable a satellite network; and
in response to the operation used to enable a satellite network, using, by the electronic device, the satellite network for communication in the second power consumption mode.

9. The method according to any one of claims 1 to 8, wherein the using the satellite network for communication in the second power consumption mode comprises: accessing, by the electronic device, the satellite network in the second power consumption mode, and/or using, by the electronic device, the satellite network to perform a satellite communication service in the second power consumption mode, wherein the satellite communication service comprises one or more of the following: a satellite call, reception and transmission of satellite messages, satellite video communication, and/or satellite voice communication.

10. The method according to any one of claims 1 to 9, further comprising:
when the electronic device uses the satellite network for communication in the first power consumption mode, receiving, by the electronic device, an operation used to exit the satellite network;
in response to the operation used to exit the satellite network, disconnecting, by the electronic device, a connection to the satellite network;
when being unable to access the terrestrial network, displaying, by the electronic device, a second pop-up window, wherein the second pop-up window comprises a control used to switch to the second power consumption mode; and
when receiving the trigger operation on the control used to switch to the second power consumption mode, switching, by the electronic device, from the first power consumption mode to the second power consumption mode.

11. An electronic device, comprising: a processor and a memory, wherein
the memory stores computer-executable instructions; and
the processor executes the computer-executable instructions stored in the memory, to enable the electronic device to perform the method according to any one of claims 1 to 10.

12. A computer-readable storage medium, wherein the computer-readable storage medium stores a computer program, wherein when the computer program is executed by a processor, the method according to any one of claims 1 to 10 is implemented.

13. A chip system, comprising at least one processor and a communication interface, wherein the communication interface and the at least one processor are interconnected through a line, and the at least one processor is configured to run a computer program or instructions, to perform the method according to any one of claims 1 to 10.

14. A computer program product, comprising a computer program, wherein when the computer program is executed, a computer is enabled to perform the method according to any one of claims 1 to 10.
